# FASCICULE DE BREVET EUROPEEN

(11) **EP 3 442 913 B1**
(45) Date de publication et mention de la délivrance du brevet: **13.01.2021**
(21) Numéro de dépôt: 17720553.1
(22) Date de dépôt: 05.04.2017
(51) Int. Cl.: C03B 35/14, C03B 35/24, C03B 23/03, C03B 23/035, C03B 40/00, C03B 23/025

(54) **BOMBAGE DE FEUILLES DE VERRE ET PROCEDE ASSOCIE**
BIEGEN VON GLASSCHEIBEN UND DAZU GEHÖRENDEM VERFAHREN
GLASS SHEET BENDING AND ASSOCIATED METHOD

(30) Priorité: 13.04.2016 FR 1653251; 25.07.2016 FR 1657135; 25.07.2016 FR 1657136
(43) Date de publication de la demande: 20.02.2019
(73) Titulaire: SAINT-GOBAIN GLASS FRANCE, 92400 Courbevoie (FR)
(72) Inventeur: PALMANTIER, Arthur, 52064 Aachen (DE); DAVID, Emilien, 35770 Vern Sur Seiche (FR); PENNERS, Jack, 52134 Herzogenrath (DE); RADERMACHER, Herbert, 4730 Raeren (BE); KAHLEN, Werner, 52134 Herzogenrath (DE); ZEICHNER, Achim, 52134 Herzogenrath (DE); SCHILLINGS, Peter, 52249 Eschweiler (DE)
(74) Mandataire: Saint-Gobain Recherche
(86) Numéro de dépôt international: PCT/FR2017/050813
(87) Numéro de publication internationale: WO 2017/178733

(56) Documents cités:
- EP-A1- 2 233 444
- WO-A1-95/32924
- US-A1- 2005 061 034
- US-A1- 2008 307 830
- US-A1- 2009 084 138

## Description

L'invention concerne un dispositif et un procédé industriel pour le bombage de feuilles de verre.

On connait de nombreux procédés de bombage. Selon les EP448447 ou EP0705798, des feuilles de verre sont bombées par gravité sur des cadres doubles, le verre passant d'un cadre ébaucheur à un cadre finisseur par escamotage d'un cadre par rapport à l'autre. L'usage de ce type de dispositif permet d'exercer un bombage progressif et d'éviter le phénomène du contre-bombage dans les coins de la feuille. Selon certains procédés comme décrit dans les WO2004/087590 ou WO2006072721, le verre est d'abord bombé par gravité sur un cadre de bombage, puis bombé par pressage contre une forme supérieure de bombage ou une forme inférieure de bombage. Ces procédés nécessitent la réalisation d'une multiplicité de supports de bombage par gravités défilant les uns derrière les autres en un train de supports. Selon EP255422 une feuille de verre est bombée par un soufflage ascendant contre une forme supérieure de bombage. On peut également citer le US5906668.

Selon EP2233444 une feuille de verre est bombée par pressage entre un moule inférieur et un moule supérieur.

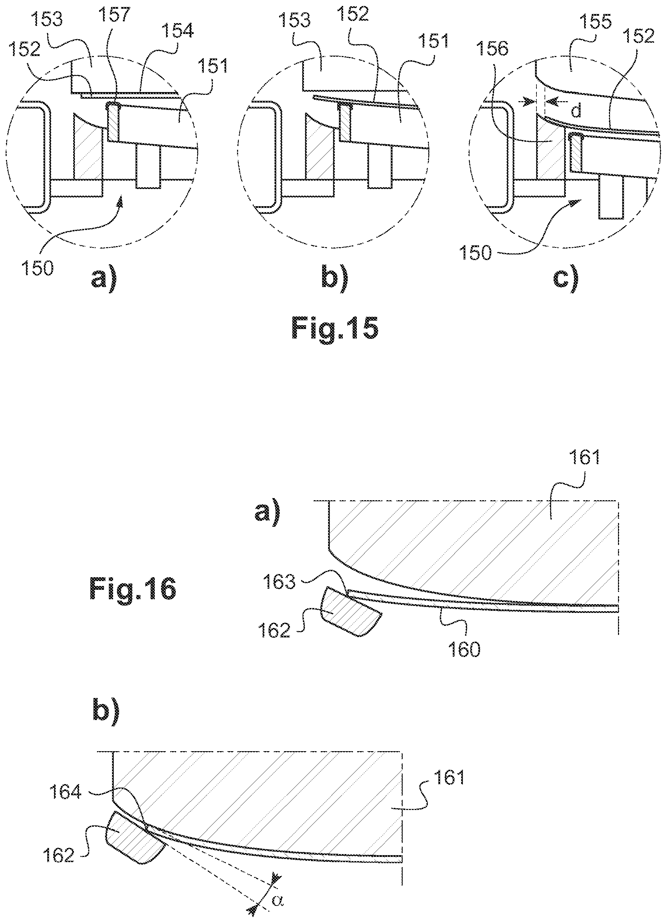

Selon la présente invention, on a conçu un dispositif très compact et rapide permettant de bomber des feuilles de verre les unes derrières les autres en mettant à profit le temps du transfert entre une position de déchargement à partir d'un moyen de convoyage et un poste de bombage par pressage pour exercer un bombage par gravité, avec un passage quasi-instantané d'une feuille de verre à bomber d'un support de bombage par gravité (dit moule ébaucheur) à un moule de pressage. Pour ce faire on a élaboré un support de bombage combinant un moule ébaucheur sur lequel la feuille commence à être bombée (ou « pré-bombé » selon une expression signifiant qu'il s'agit d'un bombage partiel par rapport au bombage final), et un moule de pressage, ces deux éléments étant intimement proches puisque l'un est à l'intérieur de l'autre, vue de dessus. Le passage de la feuille de verre du moule ébaucheur au moule de pressage se faisant par simple mouvement vertical relatif de l'un par rapport à l'autre. Le moule de pressage est destiné à presser une feuille de verre contre une forme supérieure de bombage. Ces deux outils de bombage, forme supérieure de bombage et moule de pressage, ont donc des formes complémentaires au niveau de leur zone de contact avec le verre. De préférence, c'est le moule de pressage qui entoure le moule ébaucheur. Le moule de pressage peut ainsi avantageusement presser le bord du verre sans même que l'extrême bord du verre ne dépasse du moule de pressage vers l'extérieur. Le moule de pressage déborde donc du bord du verre d'une certaine distance vers l'extérieur (distance « d » sur la figure 15 c)). Ainsi, le moule de pressage comprend une piste de contact pour le verre relativement large. La piste de contact du moule de pressage a une largeur généralement comprise dans le domaine allant de 20 à 150 mm. Le moule ébaucheur peut être une forme pleine ou un cadre, de sorte que la largeur de sa piste de contact avec le verre peut varier en de fortes proportions. Il s'agit de préférence d'un cadre, beaucoup moins onéreux qu'une forme pleine, la piste de contact avec le verre du moule ébaucheur (que l'on peut appeler dans ce cas « cadre ébaucheur ») ayant une largeur généralement comprise dans le domaine allant de 3 mm à 90 mm, ces valeurs étant données après équipement dudit moule ébaucheur avec le matériau fibreux entrant en contact avec le verre afin d'adoucir le contact du moule ébaucheur avec le verre et d'isoler thermiquement le verre du moule. Ces valeurs incluent donc l'éventuel élargissement de la piste de contact dû au matériau fibreux. Une large piste de contact, par exemple 25 mm ou plus, notamment une largeur comprise dans le domaine allant de 25 à 90 mm et de préférence dans le domaine allant de 50 à 90 mm, est préférée car cela permet de répartir le poids de la feuille de verre sur une surface plus grande et donc de réduire les risques de marquage du verre. De plus, en raison du frottement plus grand, une surface de contact plus grande procure un plus grand maintien du verre sur le moule ébaucheur et la position du verre sur ce moule sera mieux préservée malgré les déplacements latéraux aux fortes accélérations. Enfin, une piste de contact plus large peut être équipée plus facilement d'un système d'aspiration s'exerçant sur la face inférieure de la feuille. La piste de contact du moule ébaucheur est alors munie d'orifices au travers desquels l'aspiration est exercée. Dans le cas d'une surface de contact étroite (par exemple 3mm), le poids du verre est concentré sur une plus petite surface, et les risques de marquage sont plus élevés. De plus, une piste aussi étroite peut être plus difficilement équipée d'un système d'aspiration efficace. C'est pourquoi, le moule ébaucheur combine avantageusement une large piste de contact, notamment ayant une largeur comprise dans le domaine allant de 25 à 90 mm et de préférence dans le domaine allant de 50 à 90 mm, et un système d'aspiration s'exerçant sur la face inférieure de la feuille au travers d'orifices dans la piste de contact.

Pendant le déplacement latéral du support de bombage, généralement, la face supérieure du verre n'est en contact avec aucun outil, c'est-à-dire est entièrement en contact avec l'atmosphère gazeuse.

Le moule ébaucheur peut être fabriqué par formage de plaques d'acier sur un gabarit ou par une technique de fonderie. Il est de préférence non-articulé, de sorte que sa forme ne varie pas au cours du bombage. Un cadre articulé peut d'ailleurs difficilement être muni d'un système d'aspiration.

Le moule de pressage est de préférence du type cadre (on peut l'appeler « cadre de pressage ») présentant une piste de contact avec le verre relativement large. Le moule de pressage a avantageusement une géométrie précise et une bonne rigidité puisqu'il est destiné à conférer au verre sa forme finale ou quasi-finale et puisque sa forme doit bien être complémentaire de celle de la forme supérieure de bombage. C'est pourquoi le moule de pressage est de préférence une pièce épaisse et lourde pour lui donner de la rigidité et est réalisé par fonderie, sa surface de contact avec le verre étant façonnée par fraisage suivi d'un éventuel usinage rendant sa surface de contact lisse à l'œil nu.

Généralement, tous les outils de bombage venant en contact avec le verre (moule ébaucheur, forme supérieure de bombage, forme supérieure de maintien, cadre de refroidissement), sauf le moule de pressage, sont avantageusement recouverts d'un matériau en fibre réfractaire bien connu de l'homme du métier afin d'adoucir le contact de l'outil avec le verre et réduire ainsi les risques de marquage du verre ou de collage d'un éventuel émail sur l'outillage. Ce matériau fibreux, généralement du type tissé ou non-tissé ou tricot, présente généralement une épaisseur allant de 0,5 à 12 mm.

L'invention concerne notamment un dispositif pour le bombage thermique (généralement entre 600 et 750°C) de feuilles de verre comprenant une forme supérieure de bombage et un support de bombage, ladite forme supérieure de bombage et/ou ledit support de bombage étant mobiles latéralement relativement l'un par rapport à l'autre, ledit support de bombage comprenant un support de bombage par gravité dit moule ébaucheur et un moule de pressage configuré pour presser une feuille de verre contre ladite forme supérieure, l'un de ces deux moules (ébaucheur et de pressage) du support de bombage étant entouré par l'autre vue de dessus, ces deux moules du support de bombage pouvant être animés d'un mouvement vertical relatif l'un par rapport à l'autre. Quand on dit que la forme supérieure de bombage et le support de bombage sont mobiles latéralement relativement l'un par rapport à l'autre, cela signifie qu'un seul de ces deux éléments peut être mobile latéralement, l'autre étant fixe latéralement (mais pouvant éventuellement être mobile verticalement) ou que ces deux éléments sont mobiles latéralement. Lors du déplacement latéral relatif du support de bombage et/ou de la forme supérieure de bombage au cours duquel ils passent l'un au-dessus de l'autre, c'est le support de bombage qui est sous la forme supérieure de bombage.

Le terme « latéral » ou « latéralement » attaché à un déplacement, signifie que ce déplacement est horizontal ou comprend au moins une composante horizontale permettant à un élément du dispositif de se dégager par un déplacement sur le côté d'une position.

Pour le cas où le support de bombage se déplace latéralement, la stabilisation du verre en sa position optimale sur le support de bombage est recommandée. En effet, on a intérêt à ce que le support de bombage se déplace le plus rapidement possible de façon optimiser la productivité. Le support de bombage peut ainsi être soumis à de fortes accélérations ou décélérations, notamment d'au moins 1500 mm/sec², voire même d'au moins 3000 mm/sec², voire même d'au moins 5000 mm/sec². Généralement, l'accélération ou décélération reste inférieure à 7500 mm/sec². Un système de déplacement du support de bombage permet ce déplacement latéral avec ces fortes accélérations.

Pour ce faire, le support de bombage peut comprendre un moyen de maintien du verre en bonne position sur lui, en particulier sur le moule ébaucheur. Notamment, un moyen de maintien comme au moins une butée ou plus généralement des butées, peut venir au contact de la tranche du verre pour empêcher un déplacement latéral (c'est-à-dire horizontal ou avec au moins une composante horizontale) non-souhaité de la feuille par rapport au support de bombage, en cas de déplacement latéral du support de bombage. Un autre moyen de maintien peut être un système d'aspiration s'exerçant sur la face inférieure du verre, provoquant une force de pression s'exerçant sur la face supérieure du verre. L'aspiration exercée sur la feuille par le système d'aspiration est en fonctionnement pendant les fortes accélérations ou décélérations ci-dessus évoquées. Le verre appuie ainsi plus fortement sur son support et les déplacements latéraux non-souhaités du verre sur son support s'en trouvent empêchés. Pendant l'aspiration, le verre est maintenu sur le support sans bouger latéralement par rapport à lui, malgré une forte accélération ou décélération du cadre portant le verre. Dans ces moments-là, le verre est donc fixe latéralement par rapport au support et solidaire du support malgré une forte accélération ou décélération. Si le support de bombage est muni d'un moyen de maintien du type aspiration, il n'est pas nécessaire qu'il comprenne un moyen de maintien du type butées. Généralement, le maintien du verre sur son support n'est éventuellement nécessaire que lorsqu'il repose sur le moule ébaucheur.

Selon une variante, l'aspiration est exercée au travers d'orifices dans la piste de contact du moule ébaucheur. Dans ce cas, le cadre comprend au moins une chambre close sous la piste de contact, des orifices traversant le cadre de la chambre close à la surface usinée du cadre. L'intérieur de la chambre close est reliée par une canalisation à un système procurant du vide. Une pression subatmosphérique peut ainsi être créée dans la chambre close pour provoquer une aspiration au travers des orifices débouchant dans la surface usinée supérieure du cadre, cette aspiration se prolongeant au travers du matériau fibreux intercalaire de contact pour le verre. Le matériau fibreux laisse passer les gaz (non-étanchéïté du matériau fibreux aux gaz) et l'on considère que l'espace entre les fibres sont des orifices (c'est-à-dire des ouvertures) laissant passer l'aspiration. Le verre est fortement maintenu sur la piste de contact grâce à l'aspiration. Généralement, on ne cherche pas à bomber le verre par l'aspiration, mais le verre se bombe tout de même par gravité. L'aspiration a ici plutôt une action limitante sur le bombage et donne une possibilité d'influencer celui-ci. En effet, lors d'un bombage par gravité sur un cadre, le verre glisse sur le cadre au cours du bombage et du fait du bombage. Lors de ce glissement, le bord du verre se dirige légèrement vers le centre du cadre. L'aspiration tend à retenir le verre et tend donc à limiter ce glissement du verre. On peut donc jouer sur l'aspiration pour contrôler le bombage par gravité. Une forte aspiration réduit l'importance du bombage par gravité. Le moule ébaucheur est d'abord un moule permettant le transport du verre avec une forte accélération ou décélération. La piste de contact a une forme correspondant à celle souhaitée en fin de supportage sur le moule ébaucheur. Selon cette variante, l'aspiration au travers de la piste de contact peut être exercée au travers d'une partie seulement de celle-ci, notamment en deux ou trois ou quatre ou cinq ou six zones séparées. Il suffit alors de percer la surface usinée du moule ébaucheur seulement aux endroits correspondant à ces zones, ce qui réduit très sensiblement les coûts de fabrication par rapport à une situation selon laquelle l'intégralité de la surface usinée du moule ébaucheur est munie d'orifices. Sous chaque zone percée est ménagée une chambre close pouvant être mise sous vide par une canalisation reliée à un système d'aspiration. L'aspiration est donc uniquement générée dans les zones locales. L'effet de maintien sur le moule ébaucheur est suffisant et le système le permettant est moins complexe que si l'aspiration concernait toute la piste de contact du moule ébaucheur. Il convient que le contact entre la piste de contact du moule ébaucheur et le verre soit suffisant, au moins en certaines zones munies d'orifices d'aspiration, pour que le vide puisse se créer. En effet, si les formes de la piste de contact du moule ébaucheur et celle du verre sont trop différentes, alors l'aspiration ne fera que créer un flux d'air ininterrompu entre le moule ébaucheur et le verre.

Selon une autre variante, l'aspiration est exercée sur la zone centrale de la feuille au travers de l'intérieur du moule ébaucheur. Dans ce cas, le moule ébaucheur est muni d'un caisson disposé sous la zone centrale de la face inférieure de la feuille pour communiquer à celle-ci une pression subatmosphérique. Ce caisson est relié de façon étanche au cadre pour pouvoir tenir le vide sous le verre. Le caisson est relié par une canalisation à un système procurant du vide. Dans cette configuration et selon l'intensité du vide produit, l'aspiration peut produire un bombage du verre. Généralement, la piste de contact n'est pas plane mais a une forme correspondant à celle souhaitée après bombage sur le moule ébaucheur. Selon cette variante, il convient qu'une étanchéité suffisante entre la piste de contact et le verre se forme sur toute la périphérie du verre dès que le verre est posé sur la piste de contact, pour que l'aspiration puisse jouer son rôle.

Selon ces deux variantes, compte tenu de ce qu'un matériau fibreux recouvre de préférence le moule ébaucheur pour adoucir le contact avec le verre, l'étanchéité entre le verre et la piste de contact ne peut pas être parfaite, mais elle doit simplement être suffisante pour qu'une force de pression appuis sur le verre pour plaquer la feuille contre la piste de contact. La porosité ouverte du matériau fibreux joue un rôle sur le vide pouvant être créé par l'aspiration et donc aussi sur la force de pression s'exerçant sur le verre par le dessus.

Un moule ébaucheur muni d'un système d'aspiration comme il vient d'être décrit peut également comprendre un système de soufflage vers la face inférieure du verre. Ce soufflage peut avoir pour but d'aider au réglage de la force de maintien appuyant sur la face supérieure du verre tout en la réduisant, ou de réduire le risque de marquage du verre par le contact avec le cadre aspirant. Le soufflage s'exerce sur la face inférieure du verre sur une zone distincte de celle utilisée pour l'aspiration.

Le moule ébaucheur et le moule de pressage du support de bombage sont eux même des supports pour le verre et ont leur face de contact avec le verre orientée vers le haut. Le moule ébaucheur présente des courbures moins accentuées que celles du moule de pressage en au moins une zone. Le moule ébaucheur exerce un pré-bombage en donnant au verre une forme intermédiaire à celle donnée par le pressage. Le pré-bombage sur l'ébaucheur peut par exemple représenter 10 à 80% du bombage final. Ce pourcentage par rapport au bombage final peut être appréciée en posant le vitrage sur un support plan, face convexe vers le haut et en mesurant la distance entre le support plan et la plus haute côte du vitrage, et ce en comparant un vitrage pré-bombé seulement et un vitrage ayant été bombé jusqu'à la forme finale. Selon le cas, on peut aussi choisir de pré-bomber le verre de façon prépondérante selon une direction seulement (pré-bombage cylindrique de façon prépondérante) pour bomber ensuite le verre de façon prépondérante dans la direction orthogonale à la direction prépondérante de pré-bombage. Dans ce cas, le pré-bombage peut représenter plus de 80% du bombage final et même approcher les 100% du bombage final, étant entendu que ce pré-bombage n'est que partiel puisqu'il est réalisé principalement dans une seule direction.

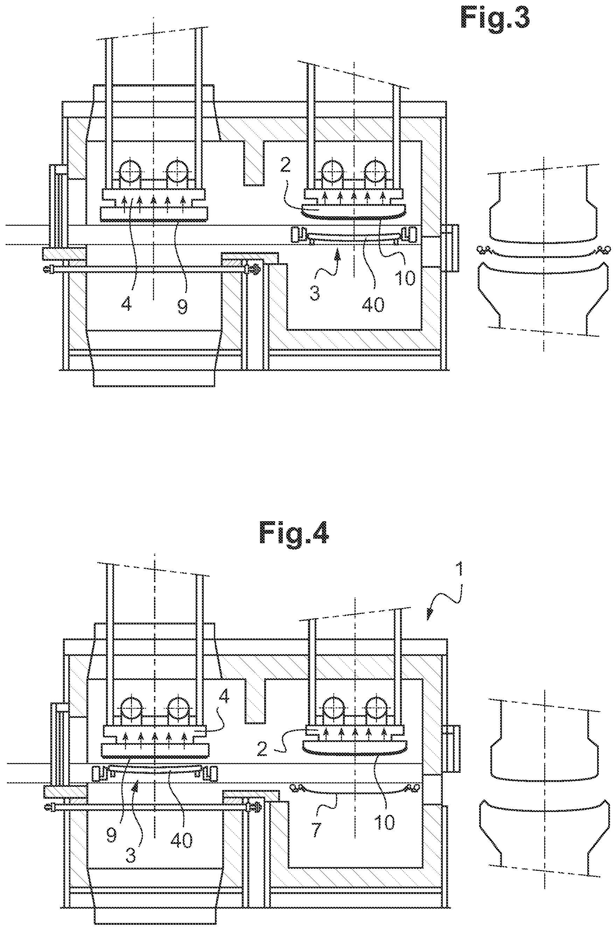

Une forme supérieure de bombage a sa face de contact avec le verre orientée vers le bas. Cette forme peut être un cadre (sans contact avec le verre en sa zone centrale) ou être une forme pleine. Cette forme supérieure de bombage est munie d'un moyen d'aspiration permettant de retenir contre elle une feuille de verre bombée par simple déclenchement de ce moyen d'aspiration. Ce moyen d'aspiration peut exercer l'aspiration au travers de sa face principale de contact avec le verre, auquel cas cette face principale comprend au moins un orifice et généralement une pluralité d'orifice au travers duquel ou desquels est exercée l'aspiration. Le moyen d'aspiration peut aussi comprendre une jupe entourant la forme supérieure de bombage, que celle-ci soit du type forme pleine ou du type cadre. Si la forme supérieure de bombage est un cadre, l'aspiration peut s'exercer au travers de l'intérieur du cadre, mais est de préférence exercée par une jupe. L'aspiration provoque un flux d'air vers le haut suffisant pour maintenir le verre contre la forme supérieure de bombage. Ce maintien contre cette forme supérieure de bombage est mis à profit pour positionner sous elle un autre support comme le support de refroidissement. L'arrêt du moyen d'aspiration permet à la forme supérieure de bombage de larguer la feuille qu'elle retenait contre elle sur cet autre support. On préfère que la forme supérieure de bombage soit munie d'un moyen d'aspiration au travers d'au moins un orifice au travers de sa face principale de contact avec le verre car outre son rôle de maintien de la feuille, ce moyen d'aspiration joue aussi le rôle d'éliminer l'air emprisonné entre le verre et la forme supérieure de bombage et de corriger un écart entre le verre et la forme après le pressage, autorisant de ce fait un bombage mieux conforme aux attentes. La figure 3 du WO2011/144865 donne un exemple de forme supérieure de bombage dont la face de contact avec le verre (référencée 31 sur cette figure) est munie d'orifice au travers desquels un moyen d'aspiration peut agir pour retenir une feuille contre elle. Cette même forme supérieure de bombage est également munie d'une jupe (référencée 39) l'entourant, un flux ascendant d'air pouvant être provoqué par aspiration dans l'espace entre la jupe et la forme supérieure de bombage.

Sur le moule ébaucheur, le verre s'affaisse par gravité sous l'effet de son propre poids. Le bombage par gravité conféré au verre est partiel et intermédiaire par rapport à celui qui lui est conféré lors de l'étape de bombage par pressage qui suit le bombage par gravité. Les feuilles de verre sont bombées à leur température de déformation par le dispositif selon l'invention, la feuille de verre à presser étant bombée partiellement sur le moule ébaucheur, puis le moule de pressage passe en position supérieure par rapport au moule ébaucheur pour prendre en charge la feuille de verre et la presser contre la forme supérieure de bombage pour accentuer son bombage. Le cas échéant, un bombage partiel par gravité peut également s'exercer sur le moule de pressage avant le pressage contre la forme supérieure de bombage. Le moule ébaucheur et le moule de pressage supportent au moins la périphérie du verre par une piste de contact. Même si le moule de pressage est un cadre relativement large, il ne contact de préférence le verre que sur une fine largeur de l'ordre de 0,5 à 3 mm et vraiment à l'extrême périphérie du verre. L'importante largeur du moule de pressage est rendue nécessaire parce que le verre glisse sur lui au cours du bombage par pressage puisque son contour vue de dessus se réduit en conséquence de son cintrage.

Un mécanisme du support de bombage permet de modifier la côte en hauteur du moule ébaucheur et du moule de pressage l'un relativement à l'autre. On parle donc d'une position supérieure et d'une position inférieure pour l'un et l'autre de ces moules, étant entendu que l'un seulement de ces moules peut se déplacer verticalement ou que les deux moules peuvent se déplacer verticalement. Un moule en position supérieure a une action prépondérante vis-à-vis du verre par rapport à l'autre moule. Un moule (ébaucheur ou de pressage) en position supérieure, supporte généralement plus le poids du verre que l'autre moule. Il n'est en effet pas exclu qu'un des moules (ébaucheur ou de pressage) en position inférieure ne continue de toucher le verre, mais il n'est pas prépondérant pour supporter le verre. C'est pourquoi on considère que le moule en position supérieure prend en charge le verre. Généralement, au commencement du contact du verre avec un moule (ébaucheur ou de pressage) en position supérieure, le moule en position supérieure est seul en contact avec le verre, l'autre moule ne touchant alors pas le verre. Plus généralement, lorsqu'un moule est en position supérieure, l'autre moule, en position inférieure, ne touche pas le verre. Il n'est cependant pas exclu que le moule en position inférieur touche tout de même le verre pour assister l'action du premier.

Généralement, le dispositif selon l'invention comprend également une forme supérieure de maintien, un moyen pneumatique de maintien permettant de maintenir contre elle une feuille de verre. Ce moyen pneumatique de maintien peut être un moyen de soufflage du bas vers le haut ou un moyen d'aspiration. Une forme supérieure de maintien présente sa face de contact avec le verre orientée vers le bas. Cette forme peut être un cadre (sans contact avec le verre en sa zone centrale) ou être une forme pleine. Cette forme supérieure de maintien peut-être munie en tant que moyen pneumatique de maintien d'un moyen d'aspiration s'exerçant soit au travers d'une jupe entourant ladite forme, soit au travers d'au moins un orifice ménagé dans sa face principale de contact avec le verre. Ce moyen d'aspiration permet de retenir le verre contre la forme supérieure de maintien par simple déclenchement de ce moyen d'aspiration. Ainsi, la face principale de la forme supérieure de maintien peut être pleine et comprendre une pluralité d'orifices au travers desquels s'exerce l'aspiration. Si cette forme supérieure de maintien est un cadre, l'aspiration peut s'exercer au travers de l'intérieur du cadre, cet intérieur constituant un unique orifice de grande taille. Une aspiration peut également s'exercer au travers d'une jupe, que la forme supérieure de maintien soit pleine ou soit un cadre. Cette faculté de pouvoir maintenir une feuille de verre contre elle est utilisée pour positionner sous elle le support de bombage. Si le support de bombage comprend un moule du type forme pleine, alors le moyen pneumatique de maintien est du type aspiration. En effet, dans ce cas, un soufflage ne pourrait pas agir pour maintenir la feuille contre la forme supérieure de maintien quand le support de bombage est sous cette forme puisque l'air de soufflage ne pourrait pas traverser le support de bombage. C'est d'ailleurs aussi une des raisons pour lesquelles le moule ébaucheur et le moule de pressage sont tous deux de préférence du type cadre, de façon à pouvoir laisser passer un air de soufflage du moyen pneumatique de maintien au travers d'eux. Le moyen pneumatique de montée peut donc être un soufflage du bas vers le haut passant au travers du moule ébaucheur et du moule de pressage pendant le mouvement latéral du support de bombage se positionnant sous la forme supérieure de maintien maintenant la feuille de verre contre elle.

L'arrêt du moyen pneumatique de maintien (d'aspiration ou de soufflage) permet à la forme supérieure de maintien de larguer la feuille qu'elle retenait contre elle sur le support de bombage. Le rôle de cette forme supérieure de maintien est principalement de prendre en charge la feuille à partir de la position de prise en charge en bout du moyen de convoyage et de la poser sur le moule ébaucheur du support de bombage. La forme supérieure de maintien peut être plane et ne pas engendrer de bombage thermique à la feuille. Cependant, il n'est pas exclu qu'elle soit bombée de façon à commencer à donner des courbures au verre par bombage thermique à la feuille de verre. Ce pré-bombage peut notamment être principalement du type cylindrique ou alors exercer des courbures selon deux directions orthogonales entre elles. La courbure engendrée par la forme supérieure peut même être, dans une direction donnée, inverse à celles finalement conférée au verre par la suite du procédé, si le bombage par gravité a tendance à aller trop vite en certaines zone. Dans ce cas, ce léger bombage inverse procuré au verre est destiné à compenser un fort bombage gravitaire venant à la suite.

Cette forme supérieure de maintien et/ou le support de bombage sont mobiles latéralement relativement l'un par rapport à l'autre, de sorte que le support de bombage peut se trouver alternativement sous la forme supérieure de maintien ou sous la forme supérieure de bombage. Quand on dit que la forme supérieure de maintien et/ou le support de bombage sont mobiles latéralement relativement l'un par rapport à l'autre, cela signifie qu'un seul de ces deux éléments peut être mobile latéralement, l'autre étant fixe latéralement (mais pouvant éventuellement être mobile verticalement) ou que ces deux éléments sont mobiles latéralement. Lors du déplacement latéral relatif du support de bombage et/ou de la forme supérieure de maintien au cours duquel ils passent l'un au-dessus de l'autre, c'est le support de bombage qui est sous la forme supérieure de maintien. La forme supérieure de maintien sert à prendre en charge une feuille de verre arrivant en une position de prise en charge puis de larguer cette feuille de verre sur le support de bombage alors que le moule ébaucheur de ce dernier est en position supérieure. Les feuilles sont convoyées l'une derrière l'autre par un moyen de convoyage menant à la position de prise en charge. A l'approche de la position de prise en charge, une feuille ralentie fortement et peut éventuellement s'arrêter. Dès son arrivée en position de prise en charge, le verre est déplacé vers le haut par action du moyen pneumatique de montée et jusqu'à son contact avec la forme supérieure de maintien.

Le moyen de convoyage est généralement un lit de rouleaux. Ce lit de rouleau mène chaque feuille de verre l'une après l'autre jusqu'à une position dite de prise en charge et ralentit, voire marque un arrêt en cette position, pour faciliter sa prise en charge par la forme supérieure de maintien. Un arrêt trop prolongé n'est pas souhaité car il pourrait provoquer un marquage du verre par les rouleaux. La position de prise en charge (correspondant à une extrémité du lit de rouleau), la forme supérieure de bombage, la forme supérieure de maintien et le support de bombage sont généralement dans une cellule de bombage portée à la température de bombage à chaud du verre, c'est-à-dire la température de déformation plastique du verre. Lorsqu'une feuille est dans la position de prise en charge, la forme supérieure de maintien va la prendre en charge grâce à un moyen pneumatique de montée, le cas échéant après un déplacement latéral afin de se positionner au-dessus de la position de prise en charge occupée par une feuille. Le moyen pneumatique de montée exerce une différence de pression provoquant un flux d'air ascendant. Ce peut être un soufflage du bas vers le haut appliqué sur la face inférieure de la feuille à l'aide d'un ventilateur (comme le ventilateur référencé 15 sur la figure 3 du EP0255422), ou une aspiration vers le haut, soit grâce à une jupe entourant la forme supérieure de maintien, soit au travers d'au moins un orifice ménagé dans la face principale de la forme supérieure de maintien. En cas de soufflage comme moyen pneumatique de montée et d'utilisation d'un lit de rouleaux comme moyen de convoyage, le soufflage est exercé au travers du lit de rouleaux. Pour ce soufflage, un canal de soufflage pour canaliser l'air de soufflage peut être disposé sous le moyen de convoyage, notamment un lit de rouleau, le flux d'air étant créé dans ce canal par un ventilateur. Alternativement, ce soufflage peut être exercé par un système de buses à air comprimé soufflant à travers le moyen de convoyage, notamment un lit de rouleau. Notamment, les buses peuvent être positionnées entre des rouleaux pour s'approcher plus près du verre. Le moyen pneumatique de montée est capable de déplacer une feuille de verre du bas vers le haut, de sa position de prise en charge jusqu'à son contact contre la forme supérieure de maintien.

La forme supérieure de maintien retient ensuite la feuille contre elle grâce à un moyen pneumatique de maintien, puis, suite à un mouvement latéral relatif de la forme supérieure de maintien et/ou du support de bombage, la forme supérieure de maintien maintenant contre elle la feuille de verre, se retrouve au-dessus du support de bombage dont le moule ébaucheur est en position supérieure et largue ladite feuille sur le moule ébaucheur pour y être bombée partiellement. Pour ce mouvement latéral relatif, la forme supérieure de maintien peut être fixe et c'est le support de bombage qui se place sous elle, ou alors, le support de bombage est fixe et c'est la forme supérieure de maintien qui se déplace pour se placer au-dessus du support de bombage, ou encore ces deux éléments se déplacent pour que finalement le support de bombage se retrouve sous la forme supérieure de maintien. Pour le cas où la forme supérieure de maintien est fixe, on peut éventuellement utiliser le même moyen pneumatique pour soulever et maintenir la feuille contre elle, le moyen pneumatique de montée étant aussi le moyen pneumatique de maintien. Cependant, si on utilise un soufflage par en-dessous pour soulever la feuille en position de prise en charge, le déplacement du support de bombage en vue de se positionner sous la forme supérieure de maintien peut éventuellement perturber le flux de soufflage, de sorte que l'on peut éventuellement préférer qu'après que le soufflage ait fait monter la feuille jusqu'à son contact avec la forme supérieure de maintien, un moyen pneumatique de maintien du type aspiration vienne prendre le relai du moyen pneumatique de montée du type soufflage pour maintenir la feuille contre la forme supérieure. Ce moyen d'aspiration est du type aspiration via au moins un orifice en la face principale de contact de la forme supérieure de maintien, ou via une jupe.

Après que la feuille ait été larguée par la forme supérieure de maintien sur le support de bombage suite à l'arrêt du moyen pneumatique de maintien maintenant la feuille contre ladite forme, le moule ébaucheur étant en position supérieure, un bombage partiel de la feuille de verre intervient sur le moule ébaucheur. Le temps nécessaire à ce bombage partiel est mis à profit pour transférer le support de bombage de sa position sous la forme supérieure de transfert vers une position sous la forme supérieure de bombage. Ce transfert est réalisé d'une part grâce à un mouvement relatif latéral du support de bombage et/ou de la forme supérieure de maintien et d'autre part grâce à un mouvement latéral relatif du support de bombage et/ou de la forme supérieure de bombage. Si la forme supérieure de maintien est fixe latéralement, alors généralement la forme supérieure de bombage est également fixe latéralement, et c'est le support de bombage qui fait la navette entre une position sous la forme supérieure de maintien pour recueillir une feuille sur son moule ébaucheur et une position sous la forme supérieure de bombage pour presser la feuille contre la forme supérieure de bombage par son moule de pressage. Si le support de bombage est fixe latéralement alors ce sont les formes supérieures qui se déplacent latéralement pour se placer l'une après l'autre au-dessus du support de bombage. Dans ce cas, la forme supérieure de maintien fait la navette entre une position au-dessus de la position de prise en charge pour prendre en charge une feuille et une position au-dessus du support de bombage pour larguer la feuille sur son moule ébaucheur. Dans ce cas également, la forme supérieure de bombage fait la navette entre une position au-dessus du support de bombage pour bomber une feuille entre elle et le moule de pressage du support de bombage, et une position de largage de la feuille en vue de son refroidissement ultérieur.

Après bombage contre la forme supérieure de bombage, la feuille bombée est refroidie. Pour ce faire, la feuille peut être larguée par la forme supérieure de bombage sur un support de refroidissement passant sous elle. Dans ce but, la forme supérieure de bombage est munie d'un moyen d'aspiration au travers de sa face principale capable de retenir contre elle la feuille de verre bombée, la feuille étant maintenu contre la forme supérieure de bombage par son moyen d'aspiration après son bombage par pressage, ce qui permet à un cadre de refroidissement mobile latéralement de se positionner sous la forme supérieure de bombage, puis le moyen d'aspiration de la forme supérieure de bombage étant stoppé, le cadre de refroidissement recueille la feuille de verre bombée larguée par la forme supérieure de bombage et l'entraîne ensuite vers une zone de refroidissement par un déplacement latéral.

La zone de refroidissement peut refroidir le verre lentement sans le durcir particulièrement. Cependant, avantageusement, la zone de refroidissement comprend des moyens de durcissement du verre comme des caissons de soufflages pouvant souffler sur les deux faces principales d'une feuille de verre. Le soufflage peut exercer un semi-durcissement ou un durcissement notamment du type trempe thermique. Avantageusement des caissons de soufflage sont à proximité immédiate du poste de bombage par pressage (comprenant la forme supérieure de bombage) et donc de l'éventuelle cellule de bombage. Un cadre de refroidissement venant de recueillir une feuille bombée de la forme supérieure de bombage, quitte cette position sous la forme supérieure de bombage, et, par un déplacement latéral après être sortie de l'éventuelle cellule de bombage, se positionne entre les caissons de soufflage pour recevoir son traitement de durcissement, notamment une trempe. Ainsi, dans la zone de refroidissement, le cadre de refroidissement portant une feuille de verre se positionne entre des caissons de soufflage d'air, et la feuille de verre subit un soufflage d'air lui occasionnant un refroidissement, notamment du type trempe thermique. Après ce soufflage d'air entre les caissons, le cadre de refroidissement, par un nouveau déplacement latéral peut entraîner la feuille vers une zone froide dans laquelle elle est déchargée. Selon un autre mode de réalisation, après le soufflage de durcissement, on peut se servir du soufflage du caisson inférieur pour que la feuille soit entraînée vers le haut jusqu'à venir au contact avec le caisson supérieur en libérant le cadre de refroidissement. Celui-ci peut alors retourner vers le poste de bombage, le cas échéant dans la cellule de bombage en vue de recueillir la feuille suivante à refroidir. Un support additionnel de refroidissement peut alors se positionner entre les caissons de soufflage sous la feuille restée en contact avec le caisson de soufflage supérieur pour la recueillir et l'entraîner vers une zone plus froide et finir son refroidissement. Ce support additionnel de refroidissement peut être du type cadre ou peut être constitué de simples barres droites. En effet, à ce stade, le verre est figé et sa déformation sous l'effet de son propre poids n'est plus à craindre, de sorte qu'il n'est pas nécessaire qu'un support ait une forme complémentaire à celle du verre.

La forme supérieure de bombage (ainsi que le moule de pressage qui lui est complémentaire) doit donner à la feuille sa forme finale ou quasi-finale. En fait, entre le moment où la forme supérieure de bombage largue une feuille bombée et le moment ou la forme de la feuille est figée par refroidissement, la forme de la feuille peut encore un peu évoluer, notamment par bombage par gravité sur le support de refroidissement. C'est pourquoi, il est utile de tenir compte de cette évolution lors de la fabrication de la forme supérieure de bombage et du moule de pressage dont les formes doivent avantageusement compenser l'évolution de forme suivant le largage de la feuille bombée et jusqu'à son figeage. La forme de la feuille peut donc subir au cours de sa traversée du dispositif de bombage selon l'invention, une succession d'étapes de bombages partiels qui influencent à chaque fois le bombage de la feuille. Ces différentes étapes sont les suivantes :
- éventuellement un bombage contre la forme supérieure de maintien si celle-ci n'est pas plane,
- un bombage par gravité sur le moule ébaucheur du support de bombage,
- un éventuel bombage par gravité sur le moule de pressage du support de bombage,
- un bombage par pressage entre le moule de pressage et la forme supérieure de bombage,
- un bombage par gravité entre le largage par la forme supérieure de bombage sur le cadre de refroidissement et le figeage du verre par refroidissement.

Le pré-bombage peut donc débuter sur la forme supérieure de maintien. La forme supérieure de maintien a dans ce cas une forme pré-bombée sur sa surface inférieure. Ce prébombage peut produire des courbures selon deux directions orthogonales entre elle. Selon un autre mode de réalisation, ce prébombage peut être principalement cylindrique.

Le pré-bombage peut également débuter après largage de la feuille plane sur le moule ébaucheur intégré au support de bombage. La forme supérieure de maintien est dans ce cas une forme plane (pick-up plan). Un pré-bombage par effondrement s'effectue dans tous les cas lors du transfert sous la forme supérieure de bombage. Le temps de transfert est donc utilisé pour le pré-bombage par gravité.

Le pré-bombage peut être poursuivi sur le moule de pressage après la prise en charge du verre par le moule de pressage. Le temps d'effondrement gravitaire peut être contrôlé par le temps donné entre la prise en charge du verre par le moule de pressage et le début du pressage. Selon le dispositif et le procédé selon l'invention, le verre est bombé de façon progressive. Le procédé de bombage comprend une ou plusieurs étapes de pré-bombage et une étape de pressage avant le transfert en zone de refroidissement, notamment une trempe thermique. Le pré-bombage a pour objectif de bomber le verre de façon progressive et de lui conférer des courbures proches de celles que lui donnera l'étape de pressage.

L'invention concerne un dispositif de bombage et le procédé faisant usage dudit dispositif. La description du dispositif et du procédé sont mélangés pour une meilleure compréhension.

Dans une forme particulièrement adaptée du procédé selon l'invention, les feuilles de verre sont convoyées l'une derrière l'autre par un moyen de convoyage, notamment du type lit de rouleaux, jusqu'à une position dite de prise en charge, la feuille en position de prise en charge étant soulevée vers le haut par un moyen pneumatique de montée, notamment du type soufflage du bas vers le haut, notamment au travers du lit de rouleaux, jusqu'à entrer en contact avec une forme supérieure de maintien positionnée au-dessus de la position de prise en charge, ladite forme supérieure de maintien retenant ensuite la feuille contre elle grâce à un moyen pneumatique de maintien, notamment d'aspiration, puis suite à un mouvement latéral relatif de la forme supérieure de maintien et/ou du support de bombage, la forme supérieure de maintien maintenant contre elle la feuille de verre est positionnée au-dessus du support de bombage dont le moule ébaucheur est en position supérieure, puis le moyen pneumatique de maintien de la forme supérieure de maintien est stoppé et ladite feuille est larguée sur le moule ébaucheur en vue de son bombage par gravité. Notamment, pendant que la feuille de verre est sur le support de bombage, suite à un mouvement latéral relatif de la forme supérieure de maintien et/ou du support de bombage et à un mouvement latéral relatif de la forme supérieure de bombage et/ou du support de bombage, la forme supérieure de maintien n'est plus positionnée au-dessus du support de bombage et la forme supérieure de bombage est positionnée au-dessus du support de bombage en vue du bombage par pressage de la feuille. Notamment, pour le mouvement latéral relatif de la forme supérieure de maintien et/ou du support de bombage, le support de bombage est animé d'un mouvement latéral, la forme supérieur de maintien étant éventuellement fixe latéralement et la forme supérieure de bombage étant éventuellement fixe latéralement. Selon une autre variante, pour le mouvement latéral relatif de la forme supérieure de maintien et/ou du support de bombage, ainsi que le mouvement latéral relatif de la forme supérieure de bombage et/ou du support de bombage, la forme supérieure de maintien et la forme supérieure de bombage sont animées d'un mouvement latéral et le support de bombage est éventuellement fixe latéralement.

Un avantage de l'invention est l'unicité de chaque outil de bombage (un seul support de bombage, une seule forme supérieure de maintien laquelle exerce un éventuel bombage partiel, une seule forme supérieure de bombage) par rapport aux procédés nécessitant la réalisation de trains de supports de bombage.

Le déplacement latéral d'au moins un outil dans le dispositif selon l'invention entraîne chaque feuille l'une après l'autre. Un déplacement latéral entraîne une feuille vers l'aval du procédé et libère une place en amont du procédé dans le dispositif et cette place peut être immédiatement occupée par une feuille suivante. Ainsi, pendant qu'une feuille est en zone de refroidissement, une première feuille suivante peut se trouver sur le support de bombage sous la forme supérieure de bombage et une deuxième feuille suivante peut se trouver en position de prise en charge sous la forme supérieure de maintien. Ainsi, on peut avoir deux feuilles se trouvant simultanément dans la cellule de bombage et une feuille en zone de refroidissement, notamment de trempe. Le bombage est donc réalisé en au moins deux étapes de bombages, ce qui procure une réduction notable du temps d'utilisation de chaque outil et donc du temps de cycle. Au cours du procédé de mise en œuvre de l'invention, la première feuille suivante va remplacer la feuille en zone de refroidissement, la deuxième feuille suivante va remplacer la première feuille suivante et une troisième feuille suivante va remplacer la deuxième feuille suivante, et ainsi de suite.

Le découpage du procédé de formage en plusieurs étapes de bombage a plusieurs avantages. En effet, plusieurs feuilles de verre peuvent se trouver simultanément dans la cellule de bombage. Chaque outillage est sollicité moins longtemps par feuille. Ceci a un fort impact pour la réduction du temps de cycle en production. Par ailleurs, chaque feuille est bombée progressivement en plusieurs étapes successives de bombage. Le temps total de bombage de chaque feuille est éventuellement plus long que dans un procédé classique, ce qui donne plus de temps au verre pour se pré-bomber et se bomber. Cette aspect progressif du bombage permet de produire des feuilles de verre de plus haute complexité et avec une meilleur qualité optique.

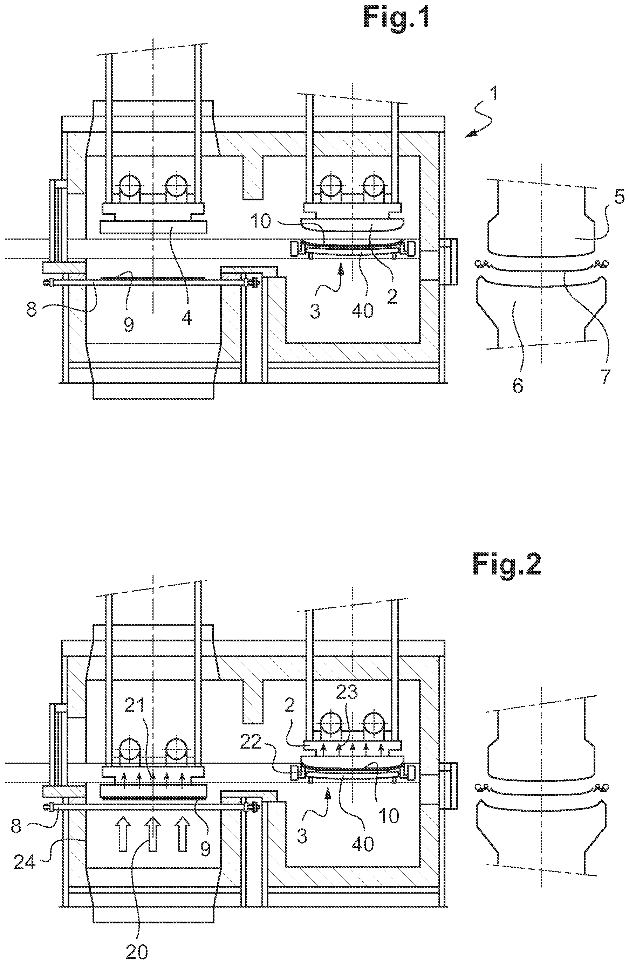

Les figures 1 à 7 représentent un mode de réalisation selon l'invention selon lequel la forme supérieure de maintien et la forme supérieure de bombage sont fixes latéralement et mobiles verticalement, et c'est le support de bombage qui passe alternativement sous l'une et sous l'autre de ces deux formes supérieures. Dans cette série de figure, chaque élément conserve sont n° de référence.

La figure 1 représente un dispositif selon l'invention et son utilisation dans un procédé de bombage. Une cellule de bombage 1 dont l'intérieur est portée à la température de bombage de feuilles de verre à bomber, comprend une forme supérieure de bombage 2, un support de bombage 3 et une forme supérieure de maintien 4. Le support de bombage supporte une feuille 10 déjà partiellement bombée par gravité, et déjà supportée par le moule de pressage en vue d'être bombée par pressage. A côté de la cellule 1 se trouve en une zone de refroidissement, deux caissons de trempe 5 et 6 entre lesquels se trouve un support de refroidissement 7. Un lit de rouleau 8 forme un moyen de convoyage de feuilles de verre 9. La direction de convoyage de ce lit 8 est perpendiculaire à la figure. Ce lit amène les feuilles 9 l'une après l'autre à la position de prise en charge dans la cellule de bombage 1 sous la forme supérieure de maintien 4. Sur la figure 1, la forme supérieure de maintien 4 et la forme supérieure de bombage 2 sont à vide et en position relevée.

La figure 2 représente le même dispositif que celui de la figure 1, mais à un stade ultérieur. Entre ces deux figures, les deux formes supérieures 2 et 4 se sont baissées, un moyen pneumatique de montée du type soufflage (représenté par les flèches 20) s'est mis en route pour souffler au travers des rouleaux 8 et soulever la feuille plane 9 jusqu'à son contact avec la forme supérieure de maintien 4. L'air de soufflage est soufflé dans un canal 24 de soufflage. Un moyen pneumatique de maintien du type aspiration (représenté par les flèches 21) s'est mis en route pour retenir la feuille 9 contre la forme supérieure de maintien malgré l'arrêt ultérieur du moyen pneumatique de montée 20. La feuille 10 a été bombée par pressage entre la forme supérieure de bombage et le moule de pressage 22 du support de bombage 3. Le moyen d'aspiration (représenté par les flèches 23) s'est mis en route pour retenir la feuille 10 contre la forme 2 malgré la séparation ultérieure entre la forme 2 et le support 3. Ce système d'aspiration 23 a deux fonctions : 1) maintenir la feuille contre la forme le temps qu'un cadre de refroidissement passe sous elle, et 2) éliminer toute bulle entre le verre et la forme supérieure autorisant un bombage mieux conforme aux attentes.

La figure 3 représente le même dispositif que celui de la figure 2, mais à un stade ultérieur. Entre ces deux figures, les deux formes supérieures 2 et 4 se sont relevées et maintenant chacune une feuille contre elle grâce à leurs moyens d'aspiration au travers de leur face principale, une feuille plane non-bombée 9 pour la forme supérieure de maintien 4 et une feuille bombée 10 pour la forme supérieure 2.

La figure 4 représente le même dispositif que celui de la figure 3, mais à un stade ultérieur. Entre ces deux figures, le support de bombage 3 s'est déplacé latéralement pour se positionner sous la forme supérieure de maintien 4, en vue de recueillir la feuille 9. Le moule ébaucheur 40 du support 3 est passé en position supérieure par rapport au moule de pressage 22. Après ouverture de la porte 41, le cadre de refroidissement 7 est rentré dans la cellule 1 par un déplacement latéral et s'est positionné sous la forme supérieure de bombage 2 en vue de recueillir la feuille 10.

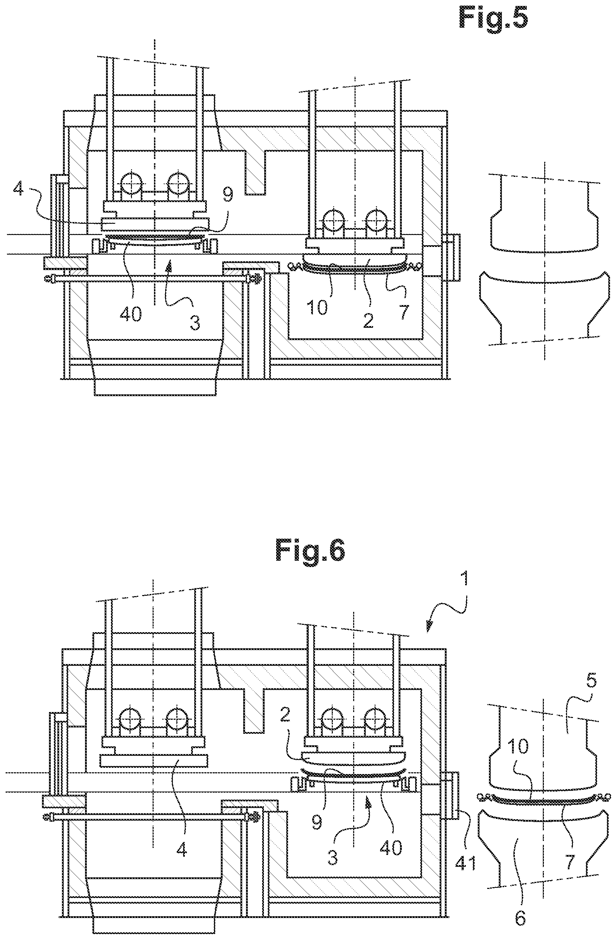

La figure 5 représente le même dispositif que celui de la figure 4, mais à un stade ultérieur. Entre ces deux figures, la forme supérieure de maintien 4 s'est baissée et a largué la feuille 9 sur le moule ébaucheur 40 du support 3 en vue de son bombage par gravité. La forme supérieure de bombage 2 s'est baissée et a largué la feuille bombée 10 sur le support de refroidissement 7.

La figure 6 représente le même dispositif que celui de la figure 5, mais à un stade ultérieur. Entre ces deux figures, les deux formes supérieures 4 et 2 se sont relevées à vide et le support 3 portant la feuille 9 s'est déplacé latéralement pour se positionner sous la forme supérieure de bombage 2, ce temps de transfert étant mis à profit pour bomber la feuille 9 par gravité sur le moule ébaucheur 40. Le cas échéant, pour éviter un déplacement latéral de la feuille sur le support de bombage, la position de la feuille sur le moule ébaucheur est maintenue grâce à des butées venant au contact de la tranche du verre.

Le support de refroidissement 7 s'est déplacé latéralement pour sortir la feuille 10 de la cellule 1 et la placer entre les caissons de trempe 5 et 6, puis la porte 41 s'est refermée.

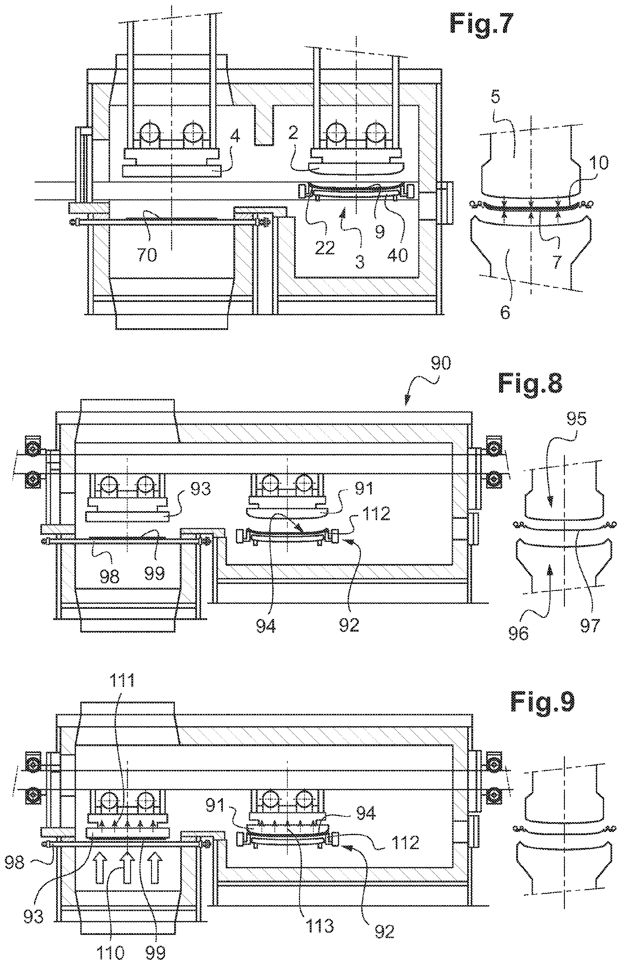

La figure 7 représente le même dispositif que celui de la figure 6, mais à un stade ultérieur. Entre ces deux figures, les caissons de trempe ont commencé à souffler de l'air sur les deux faces de la feuille 10 dans le but de la tremper, le moule de pressage 22 est passé en position supérieure pour prendre en charge la feuille 9 en vue de la presser contre la forme supérieure de bombage 2, une feuille 70 plane est arrivée en position de prise en charge sous la forme supérieure de maintien 4. On se retrouve alors dans une configuration semblable à celle de la figure 1 sauf que la feuille 70 a pris la place de la feuille 9 et va suivre son sort, la feuille 9 a pris la place de la feuille 10 et va suivre son sort, la feuille 10 va être évacuée de sa position entre les caissons par exemple par un déplacement latéral permettant de la décharger du support de refroidissement 7.

Les figures 8 à 14 représentent un mode de réalisation selon l'invention selon lequel le support de bombage est fixe latéralement et ce sont la forme supérieure de maintien et la forme supérieure de bombage qui se déplacent latéralement (et verticalement) dans la cellule de bombage. Dans cette série de figure, chaque élément conserve sont n° de référence.

La figure 8 représente un dispositif selon l'invention et son utilisation dans un procédé de bombage. Une cellule de bombage 90 dont l'intérieur est portée à la température de bombage de feuilles de verre à bomber, comprend une forme supérieure de bombage 91, un support de bombage 92 et une forme supérieure de maintien 93. Le support de bombage 92 supporte une feuille 94 déjà partiellement bombée par gravité, et déjà supportée par le moule de pressage 112 en vue d'être bombée par pressage. A côté de la cellule 90 se trouve en une zone de refroidissement, deux caissons de trempe 95 et 96 entre lesquels se trouve un support de refroidissement 97. Un lit de rouleau 98 forme un moyen de convoyage de feuilles de verre 99. La direction de convoyage de ce lit 98 est perpendiculaire à la figure. Ce lit amène les feuilles 99 l'une après l'autre à la position de prise en charge au-dessus de laquelle peut se positionner la forme supérieure de maintien 93. Sur la figure 8, la forme supérieure de maintien 93 et la forme supérieure de bombage 91 sont à vide et en position relevée. La forme supérieure de maintien 93 se trouve au-dessus de la position de prise en charge, laquelle est occupée par une feuille plane 99.

La figure 9 représente le même dispositif que celui de la figure 8, mais à un stade ultérieur. Entre ces deux figures, les deux formes supérieures 91 et 93 se sont baissées, un moyen pneumatique de montée du type soufflage (représenté par les flèches 110) s'est mis en route pour souffler au travers des rouleaux 98 et soulever la feuille plane 99 jusqu'à son contact avec la forme supérieure de maintien 93. Un moyen pneumatique de maintien du type aspiration (représenté par les flèches 111) s'est mis en route pour retenir la feuille 99 contre la forme supérieure de maintien malgré l'arrêt ultérieur du moyen pneumatique de montée 110. La feuille 94 a été bombée par pressage entre la forme supérieure de bombage 91 et le moule de pressage 112 du support de bombage 92. Le moyen d'aspiration (représenté par les flèches 113) s'est mis en route pour retenir la feuille 94 contre la forme 91 malgré la séparation ultérieure entre la forme 91 et le support 92.

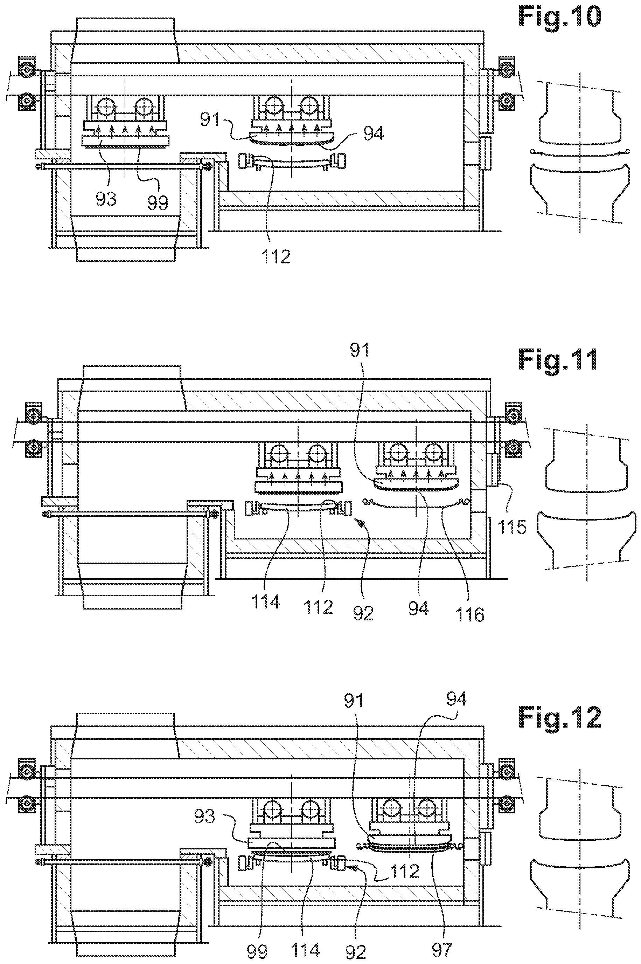

La figure 10 représente le même dispositif que celui de la figure 9, mais à un stade ultérieur. Entre ces deux figures, les deux formes supérieures 93 et 91 se sont relevées et maintiennent chacune une feuille contre elle grâce à leurs moyens d'aspiration au travers de leur face principale, une feuille plane non-bombée 99 pour la forme supérieure de maintien 93 et une feuille bombée 94 pour la forme supérieure de bombage 91.

La figure 11 représente le même dispositif que celui de la figure 10, mais à un stade ultérieur. Entre ces deux figures, la forme supérieure de maintien s'est déplacée latéralement pour se positionner au-dessus du support de bombage 92, en vue de larguer sur lui la feuille 99. Le moule ébaucheur 114 du support 92 est passé en position supérieure par rapport au moule de pressage 112 en vue de réceptionner la feuille 99. La forme supérieure de bombage 91 s'est elle aussi déplacée latéralement. Après ouverture de la porte 115, le cadre de refroidissement 116 est rentré dans la cellule 90 par un déplacement latéral et s'est positionné sous la forme supérieure de bombage 91 en vue de recueillir la feuille 94.

La figure 12 représente le même dispositif que celui de la figure 11, mais à un stade ultérieur. Entre ces deux figures, la forme supérieure de maintien 93 s'est baissée et a largué la feuille 99 sur le moule ébaucheur 114 du support 92 en vue de son bombage par gravité. La forme supérieure de bombage 91 s'est baissée et a largué la feuille bombée 114 sur le support de refroidissement 97.

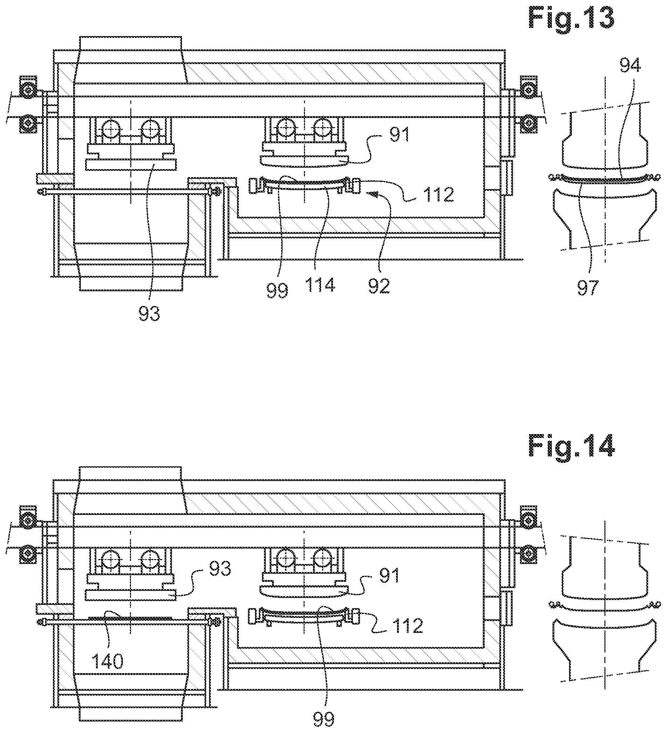

La figure 13 représente le même dispositif que celui de la figure 12, mais à un stade ultérieur. Entre ces deux figures, les deux formes supérieures 93 et 91 se sont relevées à vide et se sont déplacées latéralement, la forme supérieure de maintien 93 pour retrouver sa position au-dessus de la position de prise en charge et la forme supérieure de bombage 91 pour retrouver sa position au-dessus du support de bombage 92. Ce temps de transfert des formes supérieurs est mis à profit pour bomber la feuille 99 par gravité sur le moule ébaucheur 114. Le support de refroidissement 97 s'est déplacé latéralement pour sortir la feuille 94 de la cellule 90 et la placer entre les caissons de trempe 95 et 96, puis la porte 115 s'est refermée.

La figure 14 représente le même dispositif que celui de la figure 13, mais à un stade ultérieur. Entre ces deux figures, les caissons de trempe ont commencé à souffler de l'air sur les deux faces de la feuille 94 dans le but de la tremper, le moule de pressage 112 est passé en position supérieure pour prendre en charge la feuille 99 en vue de la presser contre la forme supérieure de bombage 91, une feuille 140 plane est arrivée en position de prise en charge sous la forme supérieure de maintien 93. On se retrouve alors dans une configuration semblable à celle de la figure 8 sauf que la feuille 140 a pris la place de la feuille 99 et va suivre son sort, la feuille 99 a pris la place de la feuille 94 et va suivre son sort, la feuille 94 va être évacuée de sa position entre les caissons par exemple par un déplacement latéral du support de refroidissement 97 permettant de la décharger dudit support de refroidissement 97.

La figure 15 représente une partie du support de bombage et le passage en position supérieur ou inférieure du moule ébaucheur et du moule de pressage. En figure 15 a) est représenté le support de bombage 150 dont le moule ébaucheur 151 est en position supérieure, apte à réceptionner la feuille 152 maintenue contre la forme supérieure de maintien 153 par le moyen pneumatique de maintien du type aspiration agissant au travers de sa face principale 154 en contact avec le verre. La piste de contact du moule ébaucheur est recouverte d'un matériau fibreux 157 bien connu de l'homme du métier pour adoucir le contact de l'outil avec le verre et réduire les risques de marquage ainsi qu'isoler le verre du moule ébaucheur. En figure 15 b), le moyen d'aspiration de la forme supérieure de maintien 153 ayant été coupé, la feuille 152 a été recueillie par le moule ébaucheur 151. Le bombage par gravité de la feuille 152 sur le moule ébaucheur 151 a commencé. Entre la figure 15 b) et la figure 15 c), un déplacement latéral relatif des formes supérieures et du support de bombage 150 a eu lieu, de sorte à ce que la forme supérieure de bombage 155 se retrouve au-dessus du support de bombage 150. En figure 15 c), le moule de pressage 156 est passé en position supérieure et a pris en charge la feuille 152. Le moule de pressage déborde du bord du verre d'une distance d.

La figure 16 représente le pressage d'une feuille de verre 160 pré-bombée entre une forme supérieure de bombage 161 et un moule de pressage 162. En a), le moule 162 a commencé à pousser la feuille 160 contre la forme 161, de sorte que la zone centrale de la feuille a commencé à entrer en contact avec la zone centrale de la forme supérieure 161. A ce stade, la zone de contact de la feuille avec le moule 162 se situe en partie haute 163 du moule 162. En b), on est en fin de pressage et la périphérie de la feuille est aussi en contact avec la forme supérieure de bombage 161. On constate que le moule 162 ne touche qu'une fine bande du verre en son extrémité, le moule s'écartant du verre quand on va vers le centre en formant un angle d'accostage alpha. Cela réduit les risques de marquage du verre par le moule 162. L'extrême bord du verre ne dépasse pas du moule de pressage 162 vers l'extérieur. Au cours du bombage, plus le verre est cintré et plus le bord du verre glisse sur le moule 162 pour finalement se retrouver dans la moitié inférieure de la largeur de la piste de contact 164 du moule 162. La forme supérieure 161 et le moule de pressage 162 ont des formes complémentaires au niveau de leur zone de contact avec le verre. On remarque que les formes de ces deux outils ne sont plus complémentaires quand on s'éloigne de la zone de contact.

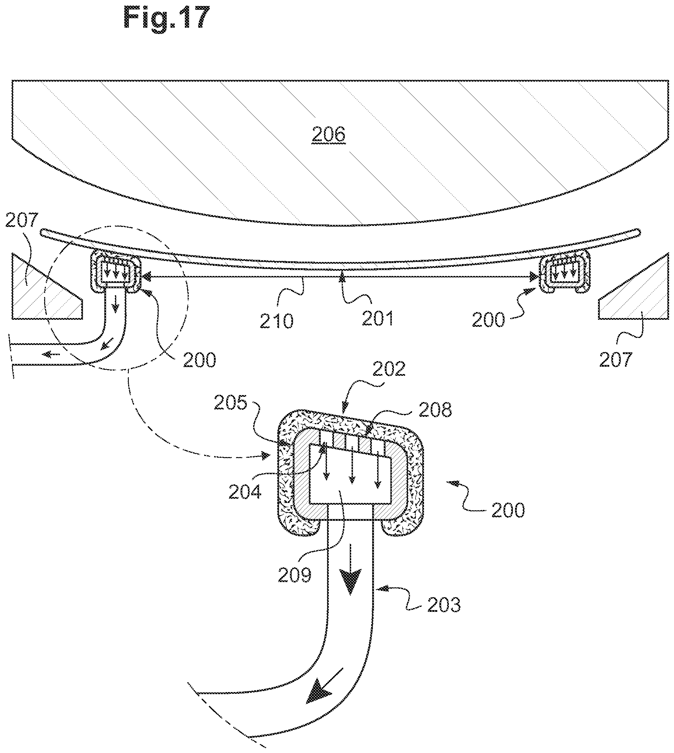

La figure 17 représente un support de bombage selon l'invention comprenant un moule ébaucheur 200 supportant une feuille de verre 201 par une piste de contact 202. Le moule ébaucheur est muni d'un système d'aspiration pour renforcer le maintien du verre sur lui pendant les fortes accélérations ou décélérations. Vue de dessus, le moule ébaucheur ainsi que sa piste de contact, a la forme d'un anneau entourant une ouverture 210. Cette piste de contact est constituée d'un matériau fibreux réfractaire 205 bien connu de l'homme du métier pour équiper les outils devant venir au contact du verre chaud. Ce matériau fibreux recouvre notamment la surface supérieure usinée 208 du moule ébaucheur sous lequel a été construite une chambre close 209 pouvant être mise sous vide, ladite surface supérieure 208 étant percée. Le matériau fibreux est suffisamment souple pour suivre la forme de la surface supérieure usinée 208 du moule ébaucheur. L'intérieur de la chambre close 209 est relié à un système de création de vide par la canalisation 203. L'aspiration passe au travers d'orifices 204 présents dans la surface supérieure usinée du moule ébaucheur, puis au travers du matériau fibreux 205, ce dernier n'étant à dessein pas étanche aux gaz. On considère qu'il comprend lui aussi des orifices laissant passer le flux d'air aspiré. Selon cette réalisation, la piste de contact est légèrement courbée. Un prébombage peut être exercé sur ce moule ébaucheur. Un autre outil de bombage est constitué de la forme supérieure de bombage 206 et d'un cadre de pressage 207, lequel entoure le moule ébaucheur 200. Le moment venu, c'est-à-dire lorsque le transfert du verre a été réalisé pour qu'il soit positionné sous la forme supérieure de bombage 206, le moule ébaucheur descend permettant au cadre de pressage de prendre en charge le verre et la forme supérieure 206 descend pour presser la feuille contre le cadre de pressage 207. L'aspiration est déclenchée pour maintenir la feuille sur le moule ébaucheur pendant le transfert du verre jusque sous la forme supérieure de bombage. Ce temps de transfert peut être mis à profit pour qu'un prébombage par gravité soit exercé sur le moule ébaucheur. Une fois le verre en bonne position, l'aspiration est arrêtée pour que le moule ébaucheur ne retienne plus le verre et que le cadre de pressage puisse prendre la feuille en charge.

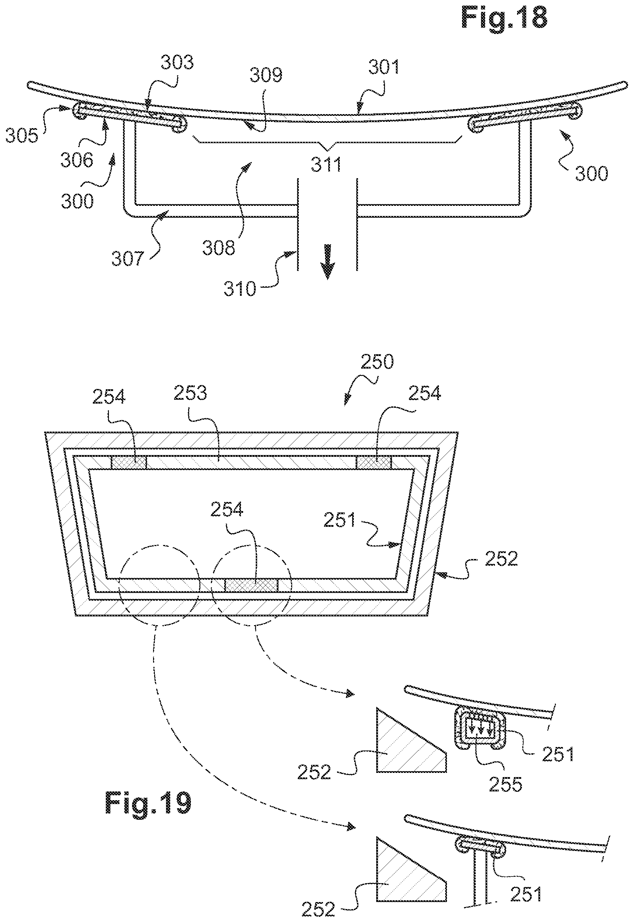

La figure 18 représente un moule ébaucheur 300 supportant une feuille de verre 301 par une piste de contact 303. Cette piste de contact est constituée d'un matériau fibreux réfractaire 305 bien connu de l'homme du métier pour équiper les outils devant venir au contact du verre chaud. Ce matériau fibreux recouvre notamment la surface supérieure d'un cadre métallique 306 en forme d'anneau entourant une ouverture 311. Le cadre métallique 306 donne la forme souhaitée à la piste de contact, le matériau fibreux étant suffisamment souple pour suivre la forme de la face supérieure du cadre métallique 306. Le cadre est relié par son côté opposé à la piste de contact à un caisson 307 formant un volume 308 sous la surface inférieure 309 de la feuille de verre. Le caisson est relié à une canalisation 310 permettant de générer un vide dans le volume 308, après dépose d'une feuille de verre sur la piste de contact. Ainsi, l'aspiration est exercée sur la zone centrale de la face inférieure 309 de la feuille, au travers de l'ouverture 311 entourée par le moule ébaucheur. Ce vide accentue la force s'exerçant sur la face supérieure de la feuille 301. La feuille repose ainsi plus fortement sur le moule ébaucheur et est ainsi mieux maintenue en position malgré les déplacements latéraux du moule ébaucheur. Comme pour le support de bombage de la figure 17, ce moule ébaucheur peut être destiné à positionner la feuille sous une forme supérieure de bombage, un cadre de pressage entourant le moule ébaucheur prenant ensuite en charge la feuille pour la bomber contre la forme supérieure de bombage, sur le principe déjà expliqué pour la figure 17.

La figure 19 représente en vue de dessus un support de bombage 250 d'une feuille de verre comprenant un moule ébaucheur 251 et un cadre de pressage 252 qui l'entoure. La piste de contact 253 du moule ébaucheur comprend 3 zones 254 (hachurées) percées d'orifices pour qu'une aspiration puisse s'exercer pour renforcer le maintien du verre sur la piste de contact. L'aspiration est donc exercée au travers d'une partie seulement de la piste de contact du moule ébaucheur. Sous la zone percée a été ménagée une chambre close 255 pouvant être mise sous vide par des canalisations (non représentées) reliées à un système d'aspiration. L'aspiration est donc générée dans 3 zones locales seulement raccordées à un système d'aspiration. Cette aspiration locale réduit les coûts d'outillage et simplifie le système d'aspiration dans le moule ébaucheur.

## Revendications

1. Dispositif pour le bombage de feuilles de verre comprenant une forme supérieure de bombage (2) et un support de bombage (3), ladite forme supérieure de bombage et/ou ledit support de bombage étant mobile latéralement relativement l'un par rapport à l'autre, ledit support de bombage comprenant un moule ébaucheur (40) pour le bombage par gravité d'une feuille de verre et un moule de pressage (22) configuré pour presser la feuille de verre contre ladite forme supérieure, l'un de ces deux moules du support de bombage étant entouré par l'autre vue de dessus, au moins l'un de ces deux moules du support de bombage pouvant être animé d'un mouvement vertical relatif par rapport à l'autre.

2. Dispositif selon la revendication précédente, **caractérisé en ce que** le moule ébaucheur est un cadre dont la piste de contact pour le verre a une largeur comprise dans le domaine allant de 3 mm à 90 mm.

3. Dispositif selon l'une des revendications précédentes, **caractérisé en ce qu'**il comprend une forme supérieure de maintien (4) munie d'un moyen pneumatique de maintien, notamment un moyen d'aspiration capable de retenir contre elle une feuille de verre, ladite forme supérieure de maintien et/ou ledit support de bombage étant mobile latéralement relativement l'un par rapport à l'autre, de sorte que le support de bombage peut se trouver alternativement sous la forme supérieure de maintien ou sous la forme supérieure de bombage.

4. Dispositif selon la revendication précédente, **caractérisé en ce que** la forme supérieure de maintien est plane ou bombée.

5. Dispositif selon l'une des deux revendications précédentes, **caractérisé en ce qu'**il comprend un moyen de convoyage (8) des feuilles l'une derrière l'autre menant chaque feuille à une position de prise en charge par la forme supérieure de maintien et un moyen pneumatique de montée capable de déplacer une feuille de verre du bas vers le haut, de sa position de prise en charge jusqu'à son contact contre la forme supérieure de maintien.

6. Dispositif selon la revendication précédente, **caractérisé en ce que** le moyen de convoyage est un lit de rouleaux et **en ce que** le moyen pneumatique de montée est un moyen de soufflage du bas vers le haut au travers du lit de rouleaux.

7. Dispositif selon l'une des revendications 3 à 6, **caractérisé en ce qu'**il comprend une cellule de bombage (1) pouvant être portée à la température de bombage, incluant la position de prise en charge, la forme supérieure de bombage, la forme supérieure de maintien et le support de bombage.

8. Dispositif selon l'une des revendications 3 à 7, **caractérisé en ce que** le support de bombage peut faire la navette entre une position sous la forme supérieure de maintien pour recueillir une feuille sur son moule ébaucheur et une position sous la forme supérieure de bombage pour presser la feuille contre la forme supérieure de bombage par son moule de pressage.

9. Dispositif selon la revendication précédente, **caractérisé en ce que** le support de bombage est apte à être animé d'un mouvement latéral avec une accélération ou décélération d'au moins 1500 mm/sec², voire même d'au moins 3000 mm/sec², voire même d'au moins 5000 mm/sec², généralement inférieure à 7500 mm/sec².

10. Dispositif selon la revendication précédente, **caractérisé en ce que** le support de bombage comprend un moyen de maintien comprenant au moins une butée pouvant venir au contact de la tranche de la feuille.

11. Dispositif selon l'une des revendications 8 à 10, **caractérisé en ce que** le moule ébaucheur est un cadre dont la piste de contact pour le verre a une largeur comprise dans le domaine allant de 25 à 90 mm et de préférence comprise dans le domaine allant de 50 à 90 mm.

12. Dispositif selon l'une des revendications 8 à 11, **caractérisé en ce que** le moule ébaucheur comprend un moyen de maintien comprenant un système d'aspiration s'exerçant sur la face inférieure du verre, au travers d'orifices dans sa piste de contact (202).

13. Dispositif selon la revendication précédente, **caractérisé en ce que** l'aspiration est suffisante pour empêcher un déplacement latéral du verre sur le moule ébaucheur pendant une accélération ou décélération.

14. Dispositif selon l'une des revendications 3 à 7, **caractérisé en ce que** la forme supérieure de maintien fait la navette entre une position au-dessus de la position de prise en charge pour prendre en charge une feuille et une position au-dessus du support de bombage pour larguer la feuille sur son moule ébaucheur, et **en ce que** la forme supérieure de bombage fait la navette entre une position au-dessus du support de bombage pour bomber une feuille entre elle et le moule de pressage du support de bombage, et une position de largage de la feuille en vue de son refroidissement.

15. Dispositif selon l'une des revendications précédentes, **caractérisé en ce que** la forme supérieure de bombage est munie d'un moyen d'aspiration capable de retenir contre elle une feuille de verre bombée.

16. Dispositif selon l'une des revendications précédentes, **caractérisé en ce qu'**il comprend un cadre de refroidissement (7) mobile latéralement et pouvant se positionner sous la forme supérieure de bombage pour recueillir une feuille bombée larguée par la forme supérieure de bombage et pouvant entraîner ladite feuille en zone de refroidissement.

17. Procédé de préparation de feuilles de verre bombées comprenant leur bombage à leur température de bombage thermique par le dispositif de l'une des revendications 1 à 7, une feuille de verre étant bombée par gravité sur le moule ébaucheur, puis le moule de pressage passe en position supérieure par rapport au moule ébaucheur pour prendre en charge la feuille de verre, puis la feuille de verre est pressée contre la forme supérieure de bombage.

18. Procédé selon la revendication précédente, **caractérisé en ce que** la forme supérieure de bombage est munie d'un moyen d'aspiration capable de retenir contre elle une feuille de verre bombée, la feuille bombée étant maintenu contre la forme supérieure de bombage par le moyen d'aspiration après le bombage par pressage, un cadre de refroidissement mobile latéralement passant sous la forme supérieure de bombage, puis le moyen d'aspiration de la forme supérieure de bombage est stoppé et le cadre de refroidissement recueille la feuille de verre bombée larguée par la forme supérieure de bombage et l'entraîne par un déplacement latéral vers une zone de refroidissement.

19. Procédé selon la revendication précédente, **caractérisé en ce que** dans la zone de refroidissement, le cadre de refroidissement portant une feuille de verre se positionne entre des caissons de soufflage d'air, la feuille de verre subissant un soufflage d'air lui occasionnant un refroidissement, notamment du type trempe thermique.

20. Procédé selon l'une des revendications précédentes de procédé, **caractérisé en ce que** les feuilles de verre sont convoyées l'une derrière l'autre par un moyen de convoyage, notamment du type lit de rouleaux, jusqu'à une position dite de prise en charge, la feuille en position de prise en charge étant soulevée vers le haut par un moyen pneumatique de montée, notamment du type soufflage du bas vers le haut, notamment au travers du lit de rouleaux, jusqu'à entrer en contact avec une forme supérieure de maintien positionnée au-dessus de la position de prise en charge, ladite forme supérieure de maintien retenant ensuite la feuille contre elle grâce à un moyen pneumatique de maintien, notamment d'aspiration, puis suite à un mouvement latéral relatif de la forme supérieure de maintien et/ou du support de bombage, la forme supérieure de maintien maintenant contre elle la feuille de verre est positionnée au-dessus du support de bombage dont le moule ébaucheur est en position supérieure, puis le moyen pneumatique de maintien de la forme supérieure de maintien est stoppé et ladite feuille est larguée sur le moule ébaucheur en vue de son bombage par gravité.

21. Procédé selon la revendication précédente, **caractérisé en ce que** la position de prise en charge, le support de bombage, la forme supérieure de maintien et la forme supérieure de bombage sont à l'intérieur d'une cellule de bombage portée à la température de bombage thermique des feuilles de verre.

22. Procédé selon l'une des deux revendications précédentes, **caractérisé en ce que** pendant que la feuille de verre est sur le support de bombage, suite à un mouvement latéral relatif de la forme supérieure de maintien et/ou du support de bombage et à un mouvement latéral relatif de la forme supérieure de bombage et/ou du support de bombage, la forme supérieure de maintien n'est plus positionnée au-dessus du support de bombage et la forme supérieure de bombage est positionnée au-dessus du support de bombage en vue du bombage par pressage de la feuille.

23. Procédé selon l'une des revendications 20 à 22, **caractérisé en ce que** pour le mouvement latéral relatif de la forme supérieure de maintien et/ou du support de bombage, le support de bombage est animé d'un mouvement latéral, la forme supérieur de maintien étant éventuellement fixe latéralement et la forme supérieure de bombage étant éventuellement fixe latéralement.

24. Procédé selon la revendication précédente, **caractérisé en ce que** le support de bombage est animé d'un mouvement latéral comprenant une accélération ou décélération d'au moins 1500 mm/sec², voire même d'au moins 3000 mm/sec², voire même d'au moins 5000 mm/sec², généralement inférieure à 7500 mm/sec².

25. Procédé selon l'une des deux revendications précédentes, **caractérisé en ce que** pendant l'accélération ou décélération du mouvement latéral du support de bombage, la feuille est maintenue sur le moule ébaucheur grâce à une aspiration générée par un système d'aspiration s'exerçant sur la face inférieure de la feuille, au travers d'orifice dans la piste de contact (202) du moule ébaucheur.

26. Procédé selon l'une des revendications 23 à 25, **caractérisé en ce que** le moule ébaucheur est un cadre dont la piste de contact pour le verre a une largeur comprise dans le domaine allant de 25 à 90 mm et de préférence comprise dans le domaine allant de 50 à 90 mm.

27. Procédé selon la revendication précédente, **caractérisé en ce que** le moule de pressage est un cadre, le moyen pneumatique de montée étant un soufflage du bas vers le haut passant au travers du moule ébaucheur et du moule de pressage pendant le mouvement latéral du support de bombage se positionnant sous la forme supérieure de maintien maintenant la feuille de verre contre elle.

28. Procédé selon l'une des revendications 20 à 22, **caractérisé en ce que** pour le mouvement latéral relatif de la forme supérieure de maintien et/ou du support de bombage, ainsi que le mouvement latéral relatif de la forme supérieure de bombage et/ou du support de bombage, la forme supérieure de maintien et la forme supérieure de bombage sont animées d'un mouvement latéral et le support de bombage est éventuellement fixe latéralement.

## Patentansprüche

1. Vorrichtung zum Biegen von Glasscheiben, umfassend eine obere Biegeform (2) und einen Biegeträger (3), wobei die obere Biegeform und/oder der Biegeträger relativ zueinander seitwärts beweglich sind, wobei der Biegeträger eine Vorform (40) zum Biegen einer Glasscheibe durch Schwerkraft und eine Pressform (22) umfasst, konfiguriert zum Pressen der Glasscheibe gegen die obere Form, wobei eine dieser zwei Biegeträgerformen, von oben betrachtet, von der anderen umgeben ist, wobei mindestens eine der zwei Biegeträgerformen relativ zu der anderen in eine vertikale Bewegung versetzt werden kann.

2. Vorrichtung nach dem vorstehenden Anspruch, **dadurch gekennzeichnet, dass** die Vorform ein Rahmen ist, dessen Kontaktbahn für das Glas eine Breite in dem Bereich, der von 3 mm bis 90 mm reicht, aufweist.

3. Vorrichtung nach einem der vorstehenden Ansprüche, **dadurch gekennzeichnet, dass** sie eine obere Halteform (4) umfasst, die mit einem pneumatischen Haltemittel, insbesondere einem Saugmittel, versehen ist, das in der Lage ist, eine Glasscheibe gegen sie festzuhalten, wobei die obere Halteform und/oder der Biegeträger relativ zueinander seitwärts beweglich sind, sodass sich der Biegeträger abwechselnd unter der oberen Halteform oder unter der oberen Biegeform befinden kann.

4. Vorrichtung nach dem vorstehenden Anspruch, **dadurch gekennzeichnet, dass** die obere Halteform flach oder gebogen ist.

5. Vorrichtung nach einem der zwei vorstehenden Ansprüche, **dadurch gekennzeichnet, dass** sie ein Mittel zum Befördern (8) der Scheiben, das jede Scheibe eine nach der anderen in eine Position zur Übernahme durch die obere Halteform bringt, und ein pneumatisches Hebemittel umfasst, das in der Lage ist, eine Glasscheibe bis zu ihrem Kontakt mit der oberen Halteform von unten nach oben aus ihrer Übernahmeposition zu bewegen.

6. Vorrichtung nach dem vorstehendem Anspruch, **dadurch gekennzeichnet, dass** das Mittel zum Befördern ein Rollenbett ist und dadurch, dass das pneumatische Hebemittel ein Mittel zum von unten nach oben gerichteten Blasen durch das Rollenbett hindurch ist.

7. Vorrichtung nach einem der Ansprüche 3 bis 6, **dadurch gekennzeichnet, dass** sie eine Biegezelle (1) umfasst, die auf die Biegetemperatur gebracht werden kann, einschließlich der Übernahmeposition, der oberen Biegeform, der oberen Halteform und des Biegeträgers.

8. Vorrichtung nach einem der Ansprüche 3 bis 7, **dadurch gekennzeichnet, dass** der Biegeträger zwischen einer Position unter der oberen Halteform zum Aufnehmen einer Scheibe auf seiner Vorform und einer Position unter der oberen Biegeform zum Pressen der Scheibe gegen die obere Biegeform durch die Pressform pendeln kann.

9. Vorrichtung nach dem vorstehenden Anspruch, **dadurch gekennzeichnet, dass** der Biegeträger geeignet ist, mit einer Beschleunigung oder Abbremsung von mindestens 1500 mm/s² oder sogar mindestens 3000 mm/s² oder sogar mindestens 5000 mm/s², im Allgemeinen weniger als 7500 mm/s² in eine seitliche Bewegung versetzt zu werden.

10. Vorrichtung nach dem vorstehenden Anspruch, **dadurch gekennzeichnet, dass** der Biegeträger ein Haltemittel umfasst, umfassend mindestens einen Anschlag, der mit der Kante der Scheibe in Kontakt kommen kann.

11. Vorrichtung nach einem der Ansprüche 8 bis 10, **dadurch gekennzeichnet, dass** die Vorform ein Rahmen ist, dessen Kontaktbahn für das Glas eine Breite in dem Bereich, der von 25 bis 90 mm reicht, und vorzugsweise in dem Bereich, der von 50 bis 90 mm reicht, aufweist.

12. Vorrichtung nach einem der Ansprüche 8 bis 11, **dadurch gekennzeichnet, dass** die Vorform ein Haltemittel umfasst, umfassend ein Saugsystem, das auf die Unterseite des Glases durch Öffnungen in seiner Kontaktbahn (202) hindurch einwirkt.

13. Vorrichtung nach dem vorstehenden Anspruch, **dadurch gekennzeichnet, dass** die Saugwirkung ausreicht, um eine seitliche Verschiebung des Glases auf der Vorform während einer Beschleunigung oder Abbremsung zu verhindern.

14. Vorrichtung nach einem der Ansprüche 3 bis 7, **dadurch gekennzeichnet, dass** die obere Halteform zwischen einer Position oberhalb der Übernahmeposition zum Übernehmen einer Scheibe und einer Position oberhalb des Biegeträgers zum Absetzen der Scheibe auf seiner Vorform pendelt, und dadurch, dass die obere Biegeform zwischen einer Position oberhalb des Biegeträgers zum Biegen einer Scheibe zwischen ihr und der Pressform des Biegeträgers und einer Position des Absetzens der Scheibe zwecks Abkühlung pendelt.

15. Vorrichtung nach einem der vorstehenden Ansprüche, **dadurch gekennzeichnet, dass** die obere Biegeform mit einem Saugmittel versehen ist, das in der Lage ist, eine gebogene Glasscheibe gegen die Biegeform festzuhalten.

16. Vorrichtung nach einem der vorstehenden Ansprüche, **dadurch gekennzeichnet, dass** sie einen Kühlrahmen (7) umfasst, der seitwärts beweglich ist und sich unter der oberen Biegeform positionieren kann, um eine gebogene Scheibe aufzunehmen, die von der oberen Biegeform abgesetzt wird, und die Scheibe in eine Kühlzone mitnehmen kann.

17. Verfahren zum Herstellen gebogener Glasscheiben, umfassend ihr Biegen bei ihrer thermischen Biegetemperatur durch die Vorrichtung nach einem der Ansprüche 1 bis 7, wobei eine Glasscheibe durch Schwerkraft auf der Vorform gebogen wird, die Pressform anschließend in eine obere Position bezüglich der Vorform übergeht, um die Glasscheibe zu übernehmen, und die Glasscheibe anschließend gegen die obere Biegeform gepresst wird.

18. Verfahren nach dem vorstehenden Anspruch, **dadurch gekennzeichnet, dass** die obere Biegeform mit einem Saugmittel versehen ist, das in der Lage ist, eine gebogene Glasscheibe gegen sie festzuhalten, wobei die gebogene Scheibe nach dem Biegen durch Pressen von dem Saugmittel gegen die obere Biegeform gehalten wird, wobei ein seitwärts beweglicher Kühlrahmen unter der oberen Biegeform hindurchgeht, wobei das Saugmittel der oberen Biegeform anschließend gestoppt wird und der Kühlrahmen die von der oberen Biegeform abgesetzte gebogene Glasscheibe aufnimmt und sie durch eine seitliche Verschiebung in Richtung einer Kühlzone mitnimmt.

19. Verfahren nach dem vorstehenden Anspruch, **dadurch gekennzeichnet, dass** der Kühlrahmen, der eine Glasscheibe trägt, sich in der Kühlzone zwischen Luftblaskästen positioniert, wobei die Glasscheibe einem Blasen von Luft unterzogen wird, die ein Abkühlen verursacht, insbesondere vom Typ thermisches Härten.

20. Verfahren nach einem der vorstehenden Verfahrensansprüche, **dadurch gekennzeichnet, dass** die Glasscheiben nacheinander durch ein Mittel zum Befördern, insbesondere vom Typ Rollenbett, bis zu einer so genannten Übernahmeposition befördert werden, wobei die Scheibe in der Übernahmeposition durch ein pneumatisches Hebemittel, insbesondere vom Typ des durch von unten nach oben gerichteten Blasens, insbesondere durch das Rollenbett hindurch, nach oben angehoben wird, bis sie mit einer oberhalb der Übernahmeposition positionierten oberen Halteform in Kontakt kommt, wobei die obere Halteform die Scheibe dann dank eines pneumatischen Haltemittels, insbesondere einem Saugmittel, gegen sich festhält, woraufhin nach einer relativen seitlichen Bewegung der oberen Halteform und/oder des Biegeträgers die obere Halteform, die die Glasscheibe jetzt gegen sich hält, oberhalb des Biegeträgers positioniert wird, dessen Vorform sich in der oberen Position befindet, woraufhin das pneumatische Haltemittel der oberen Halteform gestoppt wird und die Scheibe zwecks Biegung durch Schwerkraft auf der Vorform abgesetzt wird.

21. Verfahren nach dem vorstehenden Anspruch, **dadurch gekennzeichnet, dass** sich die Übernahmeposition, der Biegeträger, die obere Halteform und die obere Biegeform innerhalb einer Biegezelle befinden, die auf die Temperatur für das thermische Biegen von Glasscheiben gebracht wird.

22. Verfahren nach einem der zwei vorstehenden Ansprüche, **dadurch gekennzeichnet, dass,** während sich die Glasscheibe auf dem Biegeträger befindet, nach einer relativen seitlichen Bewegung der oberen Halteform und/oder des Biegeträgers und einer relativen seitlichen Bewegung der oberen Biegeform und/oder des Biegeträgers die obere Halteform nicht mehr oberhalb des Biegeträgers positioniert ist und die obere Biegeform zwecks Biegen der Scheibe durch Pressen oberhalb des Biegeträgers positioniert ist.

23. Verfahren nach einem der Ansprüche 20 bis 22, **dadurch gekennzeichnet, dass** für die relative seitliche Bewegung der oberen Halteform und/oder des Biegeträgers der Biegeträger in eine seitliche Bewegung versetzt wird, wobei die obere Halteform gegebenenfalls seitwärts befestigt ist und die obere Biegeform gegebenenfalls seitwärts befestigt ist.

24. Verfahren nach dem vorstehenden Anspruch, **dadurch gekennzeichnet, dass** der Biegeträger mit einer Beschleunigung oder Abbremsung von mindestens 1500 mm/s² oder sogar mindestens 3000 mm/s² oder sogar mindestens 5000 mm/s², im Allgemeinen weniger als 7500 mm/s², in eine seitliche Bewegung versetzt wird.

25. Verfahren nach einem der zwei vorstehenden Ansprüche, **dadurch gekennzeichnet, dass** während der Beschleunigung oder Abbremsung der seitlichen Bewegung des Biegeträgers die Scheibe dank einer Saugwirkung auf der Vorform gehalten wird, die durch ein Saugsystem erzeugt wird, das auf die Unterseite der Scheibe durch Öffnungen in der Kontaktbahn (202) der Vorform hindurch einwirkt.

26. Vorrichtung nach einem der Ansprüche 23 bis 25, **dadurch gekennzeichnet, dass** die Vorform ein Rahmen ist, dessen Kontaktbahn für das Glas eine Breite in dem Bereich, der von 25 bis 90 mm reicht, und vorzugsweise in dem Bereich, der von 50 bis 90 mm reicht, aufweist.

27. Verfahren nach dem vorstehenden Anspruch, **dadurch gekennzeichnet, dass** die Pressform ein Rahmen ist, wobei das pneumatische Hebemittel ein von unten nach oben gerichtetes Blasen ist, das während der seitlichen Bewegung des Biegeträgers, der sich unter der oberen Halteform positioniert und die Glasscheibe gegen sie hält, durch die Vorform und die Pressform hindurchgeht.

28. Verfahren nach einem der Ansprüche 20 bis 22, **dadurch gekennzeichnet, dass** für die relative seitliche Bewegung der oberen Halteform und/oder des Biegeträgers sowie die relative seitliche Bewegung der oberen Biegeform und/oder des Biegeträgers die obere Halteform und die obere Biegeform in eine seitliche Bewegung versetzt werden und der Biegeträger gegebenenfalls seitwärts fixiert wird.

## Claims

1. A device for bending sheets of glass, comprising an upper bending form (2) and a bending support (3), said upper bending form and/or said bending support being laterally mobile relative to one another, said bending support comprising a pre-bending mold (40) for the gravity bending of a sheet of glass and a press-bending mold (22) configured for pressing the sheet of glass against said upper form, of these two molds of the bending support one being surrounded by the other when viewed from above, at least one of these two molds of the bending support being able to be given a relative vertical movement with respect to the other.

2. The device as claimed in the preceding claim, **characterized in that** the pre-bending mold is a frame of which the contact path for the glass has a width comprised in the range from 3 mm to 90 mm.

3. The device as claimed in one of the preceding claims, **characterized in that** it comprises an upper retaining form (4) provided with a pneumatic retaining means, in particular a suction means capable of holding the sheet of glass against it, said upper retaining form and/or said bending support being laterally mobile relative to one another, so that the bending support may alternately find itself below the upper retaining form or below the upper bending form.

4. The device as claimed in the preceding claim, **characterized in that** the upper retaining form is flat or bent.

5. The device as claimed in one of the two preceding claims, **characterized in that** it comprises a conveying means (8), conveying sheets one after the other, bringing each sheet into a pick-up position for being picked up by the upper retaining form and a pneumatic raising means capable of moving a sheet of glass upwards from its pickup position until it comes into contact with the upper retaining form.

6. The device as claimed in the preceding claim, **characterized in that** the conveying means is a roller bed and **in that** the pneumatic raising means is a means of blowing upward through the roller bed.

7. The device as claimed in one of claims 3 to 6, **characterized in that** it comprises a bending cell (1) that can be raised to the bending temperature, including the pickup position, the upper bending form, the upper retaining form and the bending support.

8. The device as claimed in one of claims 3 to 7, **characterized in that** the bending support may shuttle back and forth between a position below the upper retaining form to collect a sheet on its pre-bending mold and a position below the upper bending form in order to press the sheet against the upper bending form via its press-bending mold.

9. The device as claimed in the preceding claim, **characterized in that** the bending support is able to be given a lateral movement with an acceleration or deceleration of at least 1500 mm/sec², or even of at least 3000 mm/sec², or even of at least 5000 mm/sec², generally of less than 7500 mm/sec².

10. The device as claimed in the preceding claim, **characterized in that** the bending support comprises a retaining means comprising at least one stop able to come into contact with the edge face of the sheet.

11. The device as claimed in one of claims 8 to 10, **characterized in that** the pre-bending mold is a frame of which the path of contact for the glass has a width comprised in the range from 25 to 90 mm and for preference comprised in the range from 50 to 90 mm.

12. The device as claimed in one of claims 8 to 11, **characterized in that** the pre-bending mold comprises a retaining means comprising a suction system acting on the underside face of the glass, through orifices in its contact path (202).

13. The device as claimed in the preceding claim, **characterized in that** the suction is strong enough to prevent lateral movement of the glass on the pre-bending mold during an acceleration or deceleration.

14. The device as claimed in one of claims 3 to 7, **characterized in that** the upper retaining form shuttles back and forth between a position above the pick-up position for picking up a sheet and a position above the bending support for releasing the sheet onto its pre-bending mold, and **in that** the upper bending form shuttles back and forth between a position above the bending support for bending a sheet between it and the press-bending mold of the bending support, and a position for releasing the sheet so that it can be cooled.

15. The device as claimed in one of the preceding claims, **characterized in that** the upper bending form is equipped with a suction means capable of holding a bent sheet of glass against it.

16. The device as claimed in one of the preceding claims, **characterized in that** it comprises a cooling frame (7) that is laterally mobile and able to position itself below the upper bending form to collect a bent sheet released by the upper bending form and capable of driving said sheet to a cooling zone.

17. A method of preparing bent sheets of glass involving bending them at their thermal-bending temperature using the device of one of claims 1 to 7, a sheet of glass being gravity bent on the pre-bending mold, then the press-bending mold moves into an upper position with respect to the pre-bending mold in order to pick up the sheet of glass, then the sheet of glass is pressed against the upper bending form.

18. The method as claimed in the preceding claim, **characterized in that** the upper bending form is provided with a suction means capable of holding a bent sheet of glass against it, the bent sheet being held against the upper bending form by the suction means after the press-bending, a laterally mobile cooling frame passing under the upper bending form, then the suction means of the upper bending form is stopped and the cooling frame collects the bent sheet of glass released by the upper bending form and drives it in a lateral movement toward a cooling zone.

19. The method as claimed in the preceding claim, **characterized in that** in the cooling zone, the cooling frame supporting a sheet of glass positions itself between air-blowing plenums, the sheet of glass experiencing a blast of air causing it to cool, in particular of the thermal tempering type.

20. The method as claimed in one of the preceding method claims, **characterized in that** the sheets of glass are conveyed one after the other by a conveying means, in particular of the roller bed type, as far as a position referred to as the pickup position, the sheet in the pickup position being raised up by a pneumatic raising means, in particular of the type blowing upward, in particular through the roller bed, until it comes into contact with an upper retaining form positioned above the pickup position, said upper retaining form then holding the sheet against it by virtue of a pneumatic retaining means, in particular a suction retaining means, and then following a relative lateral movement of the upper retaining form and/or of the bending support, the upper retaining means holding the sheet of glass against it is positioned over the bending support, the pre-bending mold of which is in an upper position, then the pneumatic retaining means of the upper retaining form is stopped and said sheet is released onto the pre-bending mold so that it can be gravity bent.

21. The method as claimed in the preceding claim, **characterized in that** the pickup position, the bending support, the upper retaining form and the upper bending form are inside a bending cell raised to the thermal bending temperature of the sheets of glass.

22. The method as claimed in one of the two preceding claims, **characterized in that** while the sheet of glass is on the bending support, following a relative lateral movement of the upper retaining form and/or of the bending support and following a relative lateral movement of the upper bending form and/or of the bending support, the upper retaining form is no longer positioned above the bending support and the upper bending form is positioned above the bending support so that the sheet can be press-bent.

23. The method as claimed in one of claims 20 to 22, **characterized in that** for the relative lateral movement of the upper retaining form and/or of the bending support, the bending support is given a lateral movement, the upper retaining form being potentially fixed laterally, and the upper bending form potentially being fixed laterally.

24. The method as claimed in the preceding claim, **characterized in that** the bending support is given a lateral movement comprising an acceleration or deceleration of at least 1500 mm/sec², or even of at least 3000 mm/sec², or even of at least 5000 mm/sec², generally of less than 7500 mm/sec².

25. The method as claimed in one of the two preceding claims, **characterized in that** during the acceleration or declaration of the lateral movement of the bending support, the sheet is held on the pre-bending mold by suction generated by a suction system acting on the underside face of the sheet, through an orifice in the contact path (202) of the pre-bending mold.

26. The method as claimed in one of claims 23 to 25, **characterized in that** the pre-bending mold is a frame of which the path of contact for the glass has a width comprised in a range from 25 to 90 mm and for preference comprised in the range from 50 to 90 mm.

27. The method as claimed in the preceding claim, **characterized in that** the press-bending mold is a frame, the pneumatic raising means being an upward blowing passing through the pre-bending mold and the press-bending mold during the lateral movement of the bending support positioning itself under the upper retaining form holding the sheet of glass against it.

28. The method as claimed in one of claims 20 to 22, **characterized in that**, for the relative lateral movement of the upper retaining form and/or of the bending support, and the relative lateral movement of the upper bending form and/or of the bending support, the upper retaining form and the upper bending form are given a lateral movement and the bending support is potentially fixed laterally.
